# EUROPEAN PATENT APPLICATION

(11) **EP 4 543 001 A1**
(43) Date of publication of application: **23.04.2025**
(21) Application number: 24196643.1
(22) Date of filing: 27.08.2024
(51) Int. Cl.: H04N 19/70

(54) **ORIENTATION-AWARE ENCODING FOR HIGHER VIDEO QUALITY**

(30) Priority: 19.10.2023 US 202363591498 P; 01.02.2024 US 202418430393
(71) Applicant: INTEL Corporation, Santa Clara, CA 95054 (US)
(72) Inventor: Mahdi, Nader, Maple Ridge, V2X7G9 (CA)
(74) Representative: Goddar, Heinz J.

(57) **Abstract**

An encoder may be tuned to handle video where most of the motion is horizontal. Re-tuning an encoder to content with non-horizontal motion is a difficult process. Instead of re-tuning the process, a solution for coding video content may include rotating a video before encoding it and rotating it back after decoding its compressed bitstream. This solution can allow encoders to consider the suitable orientation of each shot and apply different encoding parameters based on whether the shot needs to be rotated. Similarly, the solution may allow decoders to correctly display the video by rotating the decoded video data to the original orientation. Rotation information may be written into the encoded video bitstream, such as in a sequence header Open Bitstream Unit.

## Description

### Cross-reference to Related Applications

This non-provisional application claims priority to and/or receives benefit from provisional application, titled "ORIENTATION-AWARE ENCODING FOR HIGHER VIDEO QUALITY", serial no. 63/591,498, filed on October 19, 2023. The provisional application is hereby incorporated by reference in its entirety.

### Background

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
Figure (FIG.) 1 illustrates an encoding system and a plurality of decoding systems, according to some embodiments of the disclosure.
FIG. 2 illustrates an exemplary encoder to encode video frames and output an encoded bitstream, according to some embodiments of the disclosure.
FIG. 3 illustrates an exemplary decoder to decode an encoded bitstream and output a decoded video, according to some embodiments of the disclosure.
FIG. 4 illustrates an example of a shot-based encoding pipeline, according to some embodiments of the disclosure.
FIG. 5 illustrates exemplary rotation options of a shot, according to some embodiments of the disclosure.
FIG. 6 illustrates an example of syntax elements, according to some embodiments of the disclosure.
FIG. 7 illustrates an example of shot-based encoding pipeline with orientation detection and rotation option, according to some embodiments of the disclosure.
FIG. 8 illustrates selecting a rotation option for a shot, according to some embodiments of the disclosure.
FIG. 9 illustrates selecting a rotation option for a shot, according to some embodiments of the disclosure.
FIG. 10 depicts a flow diagram of an exemplary method for orientation-aware decoding, according to some embodiments of the disclosure.
FIG. 11 depicts a flow diagram of an exemplary method for orientation-aware decoding, according to some embodiments of the disclosure.
FIG. 12 depicts a flow diagram of an exemplary method for orientation-aware decoding, according to some embodiments of the disclosure.
FIG. 13 depicts a block diagram of an exemplary computing device, according to some embodiments of the disclosure.

### Detailed Description

### Overview

Video coding is the process of compressing video data for storage, transmission, and playback. Video coding may involve taking a large amount of raw video data and applying one or more compression techniques to reduce the amount of data needed to represent the video while maintaining an acceptable level of visual quality. Some widely used video coding standards include AVC (Advanced Video Coding), HEVC (High Efficiency Video Coding), and AV1 (AOMedia Video 1). Video coding standards may be used in a wide range of applications, including, e.g., video streaming, video conferencing, broadcasting, and more. AV1 is a video coding format (or codec) designed for video transmissions over the Internet. "AV1 Bitstream & Decoding Process Specification" version 1.1.1 with Errata was last modified on 2019-01-18. HEVC, also known as "H.265 ITU-T H.265 (V9) (09/2023)", was approved 2023-09-13. VVC, also known as "ITU-T H.266 (V3) (09/2023)", was approved 2023-09-29.

The encoding process may include dividing the video into a series of shots and applying one or more compression techniques to each shot individually. One of the challenges in video coding may include achieving a high level of compression while maintaining visual quality. A high level of compression can be achieved through a combination of techniques, such as motion estimation, prediction, quantization, and entropy coding.

However, some encoders may be tuned or optimized to handle natural video 7where most of the motion is horizontal due to the natural way of human motion. Tuning to handle horizonal motion can result in reduced efficiency and quality when encoding non-natural content. Non-natural content, such as screen-sharing content, gaming content, virtual reality content, mixed reality content, and augmented reality content, may have different motion patterns that are not mostly horizontal. Tuning to handle horizonal motion can result in reduced efficiency and quality when encoding natural content that have different motion patterns that are not mostly horizontal. In some cases, natural content captured on mobile devices may have different motion patterns (e.g., because of the orientation of the handheld camera). In some cases, natural content captured by drones or satellites may have different motion patterns (e.g., because the drone is moving in a particular direction overhead).

An encoder may be tuned or optimized to handle video where most of the motion is horizonal. A constraint may be that motion vectors may be limited to having more horizontal-dominant motion vectors. Another constraint may be that computational resources dedicated to searching through both vertical-dominant and horizontal-dominant motion vectors, and by design, more computational resources are allocated to identify horizontal-dominant motion vectors. Another constraint may be that entropy coding or other encoding operations may operate in a raster scan order starting from a top left block of a frame. Context changes may be more frequent, thereby leading to lower entropy coding efficiency, due to motion patterns that are not mostly horizontal.

Re-tuning or re-optimizing an encoder to handle non-natural content or other natural content with different motion patterns can be a costly and time-consuming process. In some cases, re-tuning or re-optimizing an encoder may include significant re-training on non-natural datasets or natural data sets and making dramatic adjustments to encoding algorithms and tools. Therefore, it may be beneficial and/or advantageous to implement approaches that can handle non-natural content or natural content more efficiently without requiring extensive re-tuning or re-optimizing efforts.

One re-tuning approach that has been used to address the issue of encoding video content with non-horizontal motion involves adjusting the encoding parameters to better suit the content. For example, by increasing the search range for motion estimation in the vertical direction or adjusting the block size used for prediction. In another re-tuning approach to address this issue, alternative scanning orders of the block are proposed, such as diagonal or spiral scan orders. These scanning orders can help the encoder better capture non-horizontal motion in the video and reduce the amount of block artifacts and compression errors.

Instead of re-tuning or re-optimizing the coding process, a solution for coding non-natural and natural video content, e.g., video content with non-horizontal motion, may include rotating a video before encoding it, and rotating it back after decoding its compressed bitstream. This solution can allow encoders to take into account the suitable orientation of each shot and apply different encoding parameters based on whether the shot needs to be rotated. Similarly, the solution may allow decoders to correctly display the video by rotating the decoded video data to the original orientation.

In some cases, it may be useful to incorporate and/or write rotation information into the encoded video bitstream itself to ensure that the decoder has the necessary information to correctly display the video. One approach may include adding rotation information to the sequence header that can signal: (1) whether the decoded bitstream needs to be rotated back or not, and (2) if applicable, the degree of rotation.

This solution can be useful in a range of video processing workflows, including shot-based encoding and video on demand (VOD) applications. By incorporating rotation information into the encoded video bitstream, the coding process can help to improve the overall quality of the output video, especially if the original video contains shots that are captured at different angles or have non-horizontal motion patterns.

The technique of rotating a video before encoding and rotating it back after decoding, as well as incorporating rotation information into the video bitstream, are useful techniques for optimizing the video encoding and decoding process and improving the quality of the output video.

The technique can be used in video coding standards, such as AV1 (AOMedia Video 1) and later versions of AV1. Video coding standards that include this technique can improve video encoding efficiency and quality by integrating rotation information directly into the encoded video bitstream. The technique can offer significant benefits for natural and non-natural content with non-horizontal motion, like gaming and screen-content.

Furthermore, this technique may be highly appreciated by content streaming platforms, since the technique complements shot-based encoding methodology. Shots may include portions or segments of a video potentially captured by the same camera. Shot-based encoding methodology can apply different encoding parameters and/or encoding techniques to different shots independently to optimize quality and size/bitrate of the encoded bitstream.

By rotating the source video (e.g., one or more shots of the video) before encoding and then returning the decoded bitstream to its original orientation after decoding, the encoder can capture more motion (or types of motion) and improve its predictive capability, leading to superior encoding efficiency and video quality. Different rotation parameters can be used or selected independently for each shot of the video. The technique may be especially useful for content streaming platforms, as the technique can enhance their ability to provide high-quality video content to their users and add value to their users.

Moreover, this technique has the advantage of being relatively elegant to implement. The technique may involve minimal modifications to the video encoding and decoding algorithms. Also, the technique is amendable to incorporating optimizations to the rotation process. The technique is amendable to different techniques for determining the rotation information. The technique is amendable to incorporate artificial intelligence or machine learning techniques to determine the optimal orientation, and/or rotation information.

The orientation-aware shot-based encoding technique is distinct from applying different rotations to a single block within a frame or applying different rotations to a single frame within a shot. By operating at the shot-level, and not at the block- or frame-level, the technique can take advantage of the fact that a shot has uniform spatial-temporal characteristics. The technique can avoid the overhead in computational resources and signaling needed for implementing frame-level and block-level rotations while achieving similar encoding performance. In addition, operating at the block- or frame-level may increase the complexity of the optimization problem significantly. Furthermore, operating at the block- or frame-level may result in rotations that do not improve compression performance, and worse yet, lead to worse compression performance overall.

In some embodiments, the orientation-aware encoding technique may include incorporating rotation information into the video bitstream to ensure that the decoder has information to correctly display the video. The technique may be achieved by adding a rotation direction parameter to the bitstream (e.g., in the sequence header). The rotation direction parameter may signal whether the decoded frame needs to be rotated back or not, and optionally the degree of rotation.

### Video compression

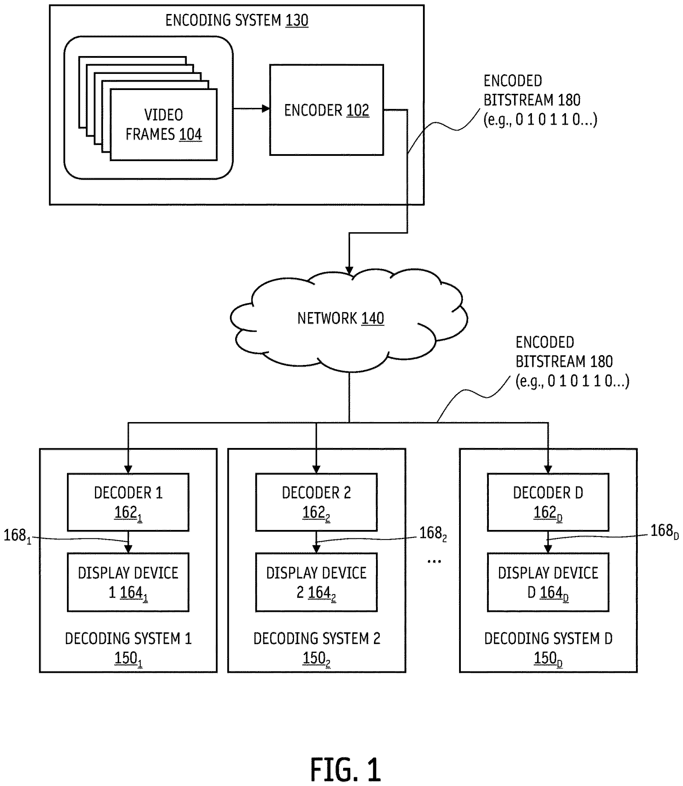

FIG. 1 illustrates encoding system 130 and one or more decoding systems 150_{1...D}, according to some embodiments of the disclosure.

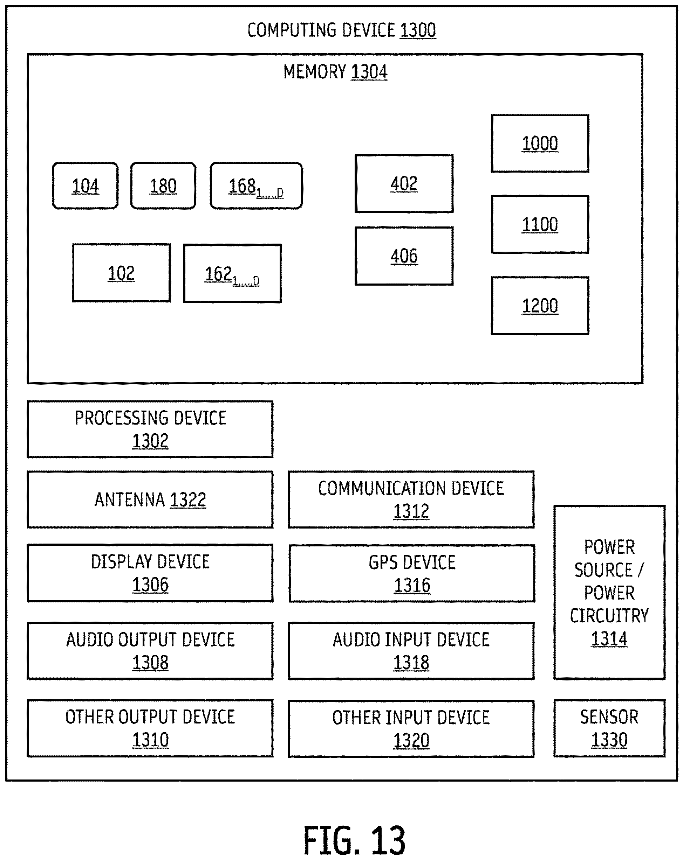

Encoding system 130 may be implemented on computing device 1300 of FIG. 13. Encoding system 130 can be implemented in the cloud or in a data center. Encoding system 130 can be implemented on a device that is used to capture the video. Encoding system 130 can be implemented on a standalone computing system. Encoding system 130 may perform the process of encoding in video compression. Encoding system 130 may receive a video (e.g., uncompressed video, original video, raw video, etc.) comprising a sequence of video frames 104. The video frames 104 may include image frames or images that make up the video. A video may have a frame rate or number of frames per second (FPS), that defines the number of frames per second of video. The higher the FPS, the more realistic and fluid the video looks. Typically, FPS is greater than 24 frames per second for a natural, realistic viewing experience to a human viewer. Examples of video may include a television episode, a movie, a short film, a short video (e.g., less than 15 seconds long), a video capturing gaming experience, computer screen-content, video conferencing content, live event broadcast content, sports content, a surveillance video, a video shot using a mobile computing device (e.g., a smartphone), etc. In some cases, video may include a mix or combination of different types of video.

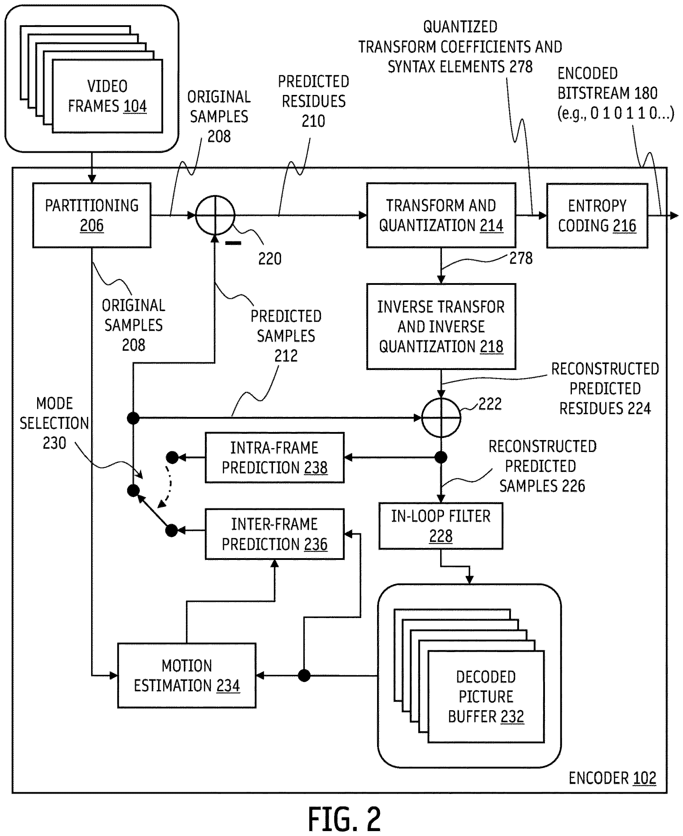

Encoding system 130 may include encoder 102 that receives video frames 104 and encodes video frames 104 into encoded bitstream 180. An exemplary implementation of encoder 102 is illustrated in FIG. 2.

Encoded bitstream 180 may be compressed, meaning that encoded bitstream 180 may be smaller in size than video frames 104. Encoded bitstream 180 may include a series of bits, e.g., having 0's and 1's. Encoded bitstream 180 may have header information, payload information, and footer information, which may be encoded as bits in the bitstream. Header information may provide information about one or more of: the format of encoded bitstream 180, the encoding process implemented in encoder 102, the parameters of encoder 102, and metadata of encoded bitstream 180. For example, header information may include one or more of: resolution information, frame rate, aspect ratio, color space, etc. Payload information may include data representing content of video frames 104, such as samples frames, symbols, syntax elements, etc. For example, payload information may include bits that encode one or more of motion predictors, transform coefficients, prediction modes, and quantization levels of video frames 104. Footer information may indicate an end of the encoded bitstream 180. Footer information may include other information including one or more of: checksums, error correction codes, and signatures. Format of encoded bitstream 180 may vary depending on the specification of the encoding and decoding process, i.e., the codec.

Encoded bitstream 180 may be transmitted to one or more decoding systems 150_{1...D}, via network 140. Network 140 may be the Internet. Network 140 may include one or more of: cellular data networks, wireless data networks, wired data networks, cable Internet networks, fiber optic networks, satellite Internet networks, etc.

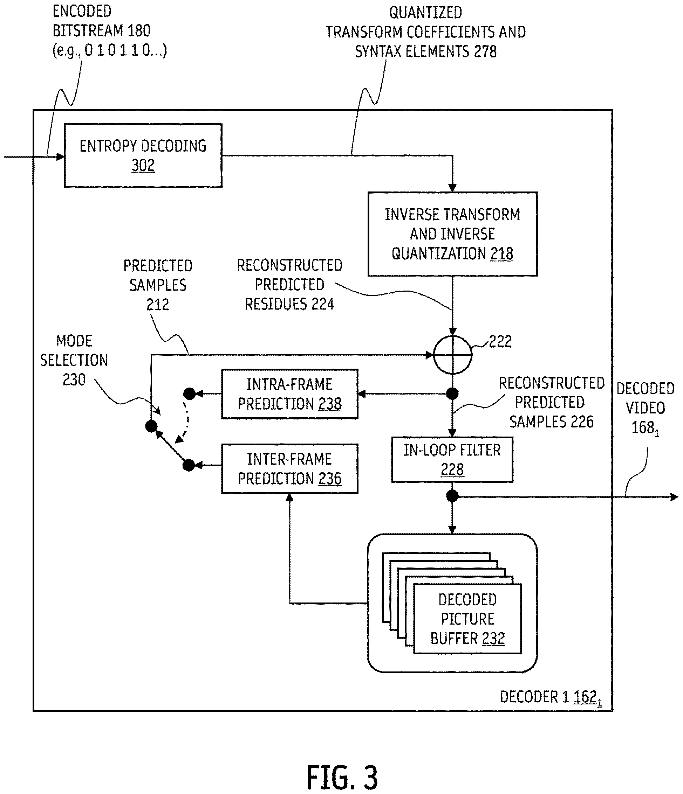

D number of decoding systems 150_{1...D} are illustrated. At least one of the decoding systems 150_{1...D} may be implemented on computing device 1300 of FIG. 13. Examples of systems 150_{1...D} may include personal computers, mobile computing devices, gaming devices, augmented reality devices, mixed reality devices, virtual reality devices, televisions, etc. Each one of decoding systems 150_{1...D} may perform the process of decoding in video compression. Each one of decoding systems 150_{1...D} may include a decoder (e.g., decoder 1...D 162_{1...D}), and one or more display devices (e.g., display device 1...D 164_{1...D}). An exemplary implementation of a decoder, e.g., decoder 1162₁, is illustrated in FIG. 3.

For example, decoding system 1150₁, may include decoder 1 162₁ and a display device 1 164₁. Decoder 1 162₁ may implement a decoding process of video compression. Decoder 1 162₁ may receive encoded bitstream 180 and produce decoded video 168₁. Decoded video 168₁ may include a series of video frames, which may be a version or reconstructed version of video frames 104 encoded by encoding system 130. Display device 1 164₁ may output the decoded video 168₁ for display to one or more human viewers or users of decoding system 1 150₁.

For example, decoding system 2 150₂, may include decoder 2 162₂ and a display device 2 164₂. Decoder 2 162₂ may implement a decoding process of video compression. Decoder 2 162₂ may receive encoded bitstream 180 and produce decoded video 168₂. Decoded video 168₂ may include a series of video frames, which may be a version or reconstructed version of video frames 104 encoded by encoding system 130. Display device 2 164₂ may output the decoded video 168₂ for display to one or more human viewers or users of decoding system 2 150₂.

For example, decoding system D 150_{D}, may include decoder D 162_{D} and a display device D 164_{D}. Decoder D 162_{D} may implement a decoding process of video compression. Decoder D 162_{D} may receive encoded bitstream 180 and produce decoded video 168_{D}. Decoded video 168_{D} may include a series of video frames, which may be a version or reconstructed version of video frames 104 encoded by encoding system 130. Display device D 164_{D} may output the decoded video 168_{D} for display to one or more human viewers or users of decoding system D 150_{D}.

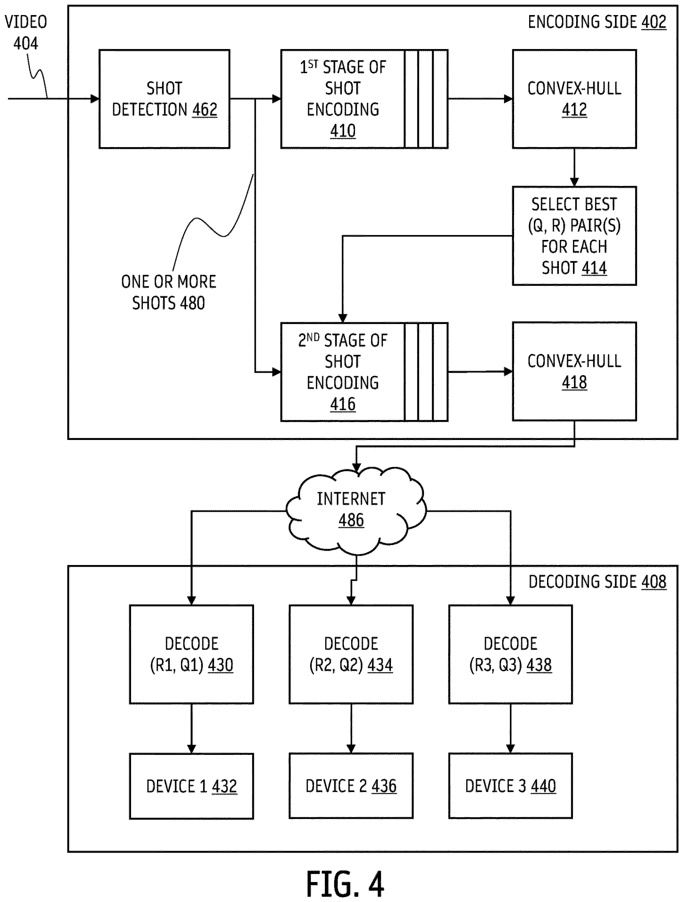

As discussed herein, encoder 102 may be modified to implement operations as illustrated in FIGS. 4, and 6-10. Decoders such as decoder 1...D 162_{1...D}, may be modified to implement operations as illustrated in FIGS. 4, 6-9, and 11-12.

### Video encoder

FIG. 2 illustrates encoder 102 to encode video frames and output an encoded bitstream, according to some embodiments of the disclosure. Encoder 102 may include one or more of: signal processing operations and data processing operations, including inter and intra-frame prediction, transform, quantization, in-loop filtering, and entropy coding. Encoder 102 may include a reconstruction loop involving inverse quantization, and inverse transformation to guarantee that the decoder would see the same reference blocks and frames. Encoder 102 may receive video frames 104 and encodes video frames 104 into encoded bitstream 180. Encoder 102 may include one or more of partitioning 206, transform and quantization 214, inverse transform and inverse quantization 218, in-loop filter 228, motion estimation 234, inter-frame prediction 236, intra-frame prediction 238, and entropy coding 216.

Partitioning 206 may divide a frame in video frames 104 into blocks of pixels. Different codecs may allow different variable range of block sizes. In one codec, a frame may be partitioned by partitioning 206 into superblocks of size 128x128 or 64x64 pixels. Partitioning 206 may further divide each superblock using a multi-way partition tree structure. In some cases, a partition of a superblock can be recursively divided further by partitioning 206 using the multi-way partition tree structure (e.g., down to 4x4 size blocks). In another codec, a frame may be partitioned by partitioning 206 into coding tree units of size 128x128 pixels. Partitioning 206 may divide a coding tree unit using a quadtree partitioning structure into four coding units. Partitioning 206 may further recursively divide a coding unit using the quadtree partitioning structure. Partitioning 206 may (further) subdivide a coding unit using a multi-type tree structure (e.g., a quadtree, a binary tree, or ternary tree structure). A smallest coding unit may have a size of 4x4. In some codecs, coding units of luma pixels may be subdivided into smaller coding units (e.g., performing more tree structure subdivisions) than coding units of chroma pixels (e.g., stopping tree structure subdivision earlier). Partitioning 206 may output original samples 208, e.g., as blocks of pixels.

Intra-frame prediction 238 may predict samples of a block from reconstructed predicted samples of previously encoded spatial neighboring blocks of the same frame. Intra-frame prediction 238 may receive reconstructed predicted samples 226 (of previously encoded spatial neighbor blocks of the same frame). Reconstructed predicted samples 226 may be generated by summer 222 from reconstructed predicted residues 224 and predicted samples 212. Intra-frame prediction 238 may determine a suitable predictor for predicting the samples from reconstructed predicted samples of previously encoded spatial neighboring blocks of the same frame. Intra-frame prediction 238 may generate predicted samples 212 generated using the suitable predictor. Intra-frame prediction 238 may output or identify the neighboring block and a predictor used in generating the predicted samples 212. The identified neighboring block and predictor may be encoded in the encoded bitstream 180 to enable a decoder to reconstruct a block using the same neighboring block and predictor. In one codec, intra-frame prediction 238 may support a number of diverse predictors, e.g., 56 different predictors. Some predictors, e.g., directional predictors, may capture different spatial redundancies in directional textures. Pixel values of a block can be predicted using a directional predictor in intra-frame prediction 238 by extrapolating pixel values of a neighboring block along a certain direction. Intra-frame prediction 238 of different codecs may support different sets of predictors to exploit different spatial patterns within the same frame. Examples of predictors may include direct current (DC), planar, Paeth, smooth, smooth vertical, smooth horizontal, recursive-based filtering modes, chroma-from-luma, intra block copy, color palette, multiple-reference line, intra sub-partition, matrix-based intra-prediction (matrix coefficients may be defined by offline training using neural networks), wide-angle prediction, cross-component linear model, template matching, etc.

Motion estimation 234 and inter-frame prediction 236 may predict samples of a block from samples of previously encoded frames, e.g., reference frames in decoded picture buffer 232. Motion estimation 234 may receive original samples 208 from partitioning 206. Motion estimation 234 may receive samples from decoded picture buffer 232 (e.g., samples of previously encoded frames or reference frames). Motion estimation 234 may use a number of reference frames for determining one or more suitable motion predictors. Motion predictors may include motion vectors that capture the movement of blocks between frames in a video. Motion estimation 234 may output or identify one or more reference frames and one or more suitable motion predictors. Inter-frame prediction 236 may apply the one or more suitable motion predictors determined in motion estimation 234 and one or more reference frames to generate predicted samples 212. The identified reference frame(s) and motion predictor(s) may be encoded in the encoded bitstream 180 to enable a decoder to reconstruct a block using the same reference frame(s) and motion predictor(s). In one codec, motion estimation 234 may implement single reference frame prediction mode, where a single reference frame with a corresponding motion predictor is used for inter-frame prediction 236. Motion estimation 234 may implement compound reference frame prediction mode where two reference frames with two corresponding motion predictors are used for inter-frame prediction 236. In one codec, motion estimation 234 may implement techniques for searching and identifying good reference frame(s) that can yield the most efficient motion predictor. The techniques in motion estimation 234 may include searching for good reference frame(s) candidates spatially (within the same frame) and temporally (in previously encoded frames). The techniques in motion estimation 234 may include searching a deep spatial neighborhood to find a spatial candidate pool. The techniques in motion estimation 234 may include utilizing temporal motion field estimation mechanisms to generate a temporal candidate pool. The techniques in motion estimation 234 may use a motion field estimation process. After temporal and spatial candidates may be ranked and a suitable motion predictor may be determined. In one codec, inter-frame prediction 236 may support a number of diverse motion predictors. Examples of predictors may include geometric motion vectors (complex, non-linear motion), warped motion compensation (affine transformations that capture non-translational object movements), overlapped block motion compensation, advanced compound prediction (compound wedge prediction, difference-modulated masked prediction, frame distance-based compound prediction, and compound inter-intra prediction), dynamic spatial and temporal motion vector referencing, affine motion compensation (capturing higher-order motion such as rotation, scaling, and sheering), adaptive motion vector resolution modes, geometric partitioning modes, bidirectional optical flow, prediction refinement with optical flow, bi-prediction with weights, extended merge prediction, etc.

Mode selection 230 may be informed by components such as motion estimation 234 to determine whether inter-frame prediction 236 or intra-frame prediction 238 may be more efficient for encoding a block.

Transform and quantization 214 may receive predicted residues 210. Predicted residues 210 may be generated by subtractor 220 that takes original samples 208 and subtracts predicted samples 212 to output predicted residues 210. Predicted residues 210 may be referred to as prediction error of the intra-frame prediction 238 and inter-frame prediction 236 (e.g., error between the original samples and predicted samples 212). Prediction error has a smaller range of values than the original samples and can be coded with fewer bits in encoded bitstream 180. Transform and quantization 214 may include one or more of transforming and quantizing. Transforming may include converting the predicted residues 210 from the spatial domain to the frequency domain. Transforming may include applying one or more transform kernels. Examples of transform kernels may include horizontal and vertical forms of discrete cosine transforms (DCT), asymmetrical discrete sine transform (ADST), flip ADST, and identity transform (IDTX), multiple transform selection, low-frequency non-separatable transform, subblock transform, non-square transforms, DCT-VIII, discrete sine transform VII (DST-VII), discrete wavelet transform (DWT), etc. Transforming may convert the predicted residues 210 into transform coefficients. Quantizing may quantize the transformed coefficients, e.g., by reducing the precision of the transform coefficients. Quantizing may include using quantization matrices (e.g., linear and non-linear quantization matrices). The elements in the quantization matrix can be larger for higher frequency bands and smaller for lower frequency bands, which means that the higher frequency coefficients are more coarsely quantized, and the lower frequency coefficients are more finely quantized. Quantizing may include dividing each transform coefficient by a corresponding element in the quantization matrix and rounding to the nearest integer. Effectively, the quantization matrices may implement different quantization parameters (QPs) for different frequency bands and chroma planes and can use spatial prediction. A suitable quantization matrix can be selected and signaled for each frame and encoded in encoded bitstream 180. Transform and quantization 214 may output quantized transform coefficients and syntax elements 278 that indicate the coding modes and parameters used in the encoding process implemented in encoder 102.

Inverse transform and inverse quantization 218 may apply the inverse operations performed in transform and quantization 214 to produce reconstructed predicted residues 224 as part of a reconstruction path to produce decoded picture buffer 232 for encoder 102. inverse transform and inverse quantization 218 may receive quantized transform coefficients and syntax elements 278. Inverse transform and inverse quantization 218 may perform one or more inverse quantization operations, e.g., applying an inverse quantization matrix, to obtain the unquantized/original transform coefficients. Inverse transform and inverse quantization 218 may perform one or more inverse transform operations, e.g., inverse transform (e.g., inverse DCT, inverse DWT, etc.), to obtain reconstructed predicted residues 224. A reconstruction path is provided in encoder 102 to generate reference blocks and frames, which are stored in decoded picture buffer 232. The reference blocks and frames may match the blocks and frames to be generated in the decoder. The reference blocks and frames are used as reference blocks and frames by motion estimation 234, inter-frame prediction 236, and intra-frame prediction 238.

In-loop filter 228 may implement filters to smooth out artifacts introduced by the encoding process in encoder 102 (e.g., processing performed by partitioning 206 and transform and quantization 214). In-loop filter 228 may receive reconstructed predicted samples 226 from summer 222 and output frames to decoded picture buffer 232. Examples of filters may include constrained low-pass filter, directional deringing filter, edge-directed conditional replacement filter, loop restoration filter, Wiener filter, self-guided restoration filters, constrained directional enhancement filter, luma mapping with chroma scaling, sample adaptive offset filter, adaptive loop filter, cross-component adaptive loop filter, etc.

Entropy coding 216 may receive quantized transform coefficients and syntax elements 278 (e.g., referred to herein as symbols) and perform entropy coding. Entropy coding 216 may generate and output encoded bitstream 180. Entropy coding 216 may exploit statistical redundancy and apply lossless algorithms to encode the symbols and produce a compressed bitstream, e.g., encoded bitstream 180. Entropy coding 216 may implement some version of arithmetic coding. Different versions may have different pros and cons. In one codec, entropy coding 216 may implement (symbol to symbol) adaptive multi-symbol arithmetic coding. In another codec, entropy coding 216 may implement context-based adaptive binary arithmetic coder (CABAC). Binary arithmetic coding differs from multi-symbol arithmetic coding. Binary arithmetic coding encodes only a bit at a time, e.g., having either a binary value of 0 or 1. Binary arithmetic coding may first convert each symbol into a binary representation (e.g., using a fixed number of bits per-symbol). Handling just binary value of 0 or 1 can simplify computation and reduce complexity. Binary arithmetic coding may assign a probability to each binary value (e.g., a chance of the bit having a binary value of 0 and a chance of the bit having a binary value of 1). Multi-symbol arithmetic coding performs encoding for an alphabet having at least two or three symbol values and assigns a probability to each symbol value in the alphabet. Multi-symbol arithmetic coding can encode more bits at a time, which may result in a fewer number of operations for encoding the same amount of data. Multi-symbol arithmetic coding can require more computation and storage (since probability estimates may be updated for every element in the alphabet). Maintaining and updating probabilities (e.g., cumulative probability estimates) for each possible symbol value in multi-symbol arithmetic coding can be more complex (e.g., complexity grows with alphabet size). Multi-symbol arithmetic coding is not to be confused with binary arithmetic coding, as the two different entropy coding processes are implemented differently and can result in different encoded bitstreams for the same set of quantized transform coefficients and syntax elements 278.

As discussed herein, encoder 102 may be modified to implement operations as illustrated in FIGS. 4, and 6-10. Encoder 102 may include orientation detection. Encoder 102 may include rotating uncompressed video frames. Encoder 102 may write rotation information into an encoded bitstream.

### Video decoder

FIG. 3 illustrates decoder 1 162₁ to decode an encoded bitstream and output a decoded video, according to some embodiments of the disclosure. Decoder 1 162₁ may include one or more of: signal processing operations and data processing operations, including entropy decoding, inverse transform, inverse quantization, inter and intra-frame prediction, in-loop filtering, etc. Decoder 1 162₁ may have signal and data processing operations that mirror the operations performed in the encoder. Decoder 1 162₁ may apply signal and data processing operations that are signaled in encoded bitstream 180 to reconstruct the video. Decoder 1 162₁ may receive encoded bitstream 180 and generate and output decoded video 168₁ having a plurality of video frames. The decoded video 168₁ may be provided to one or more display devices for display to one or more human viewers. Decoder 1 162₁ may include one or more of entropy decoding 302, inverse transform and inverse quantization 218, in-loop filter 228, inter-frame prediction 236, and intra-frame prediction 238. Some of the functionalities are previously described and used in the encoder, such as encoder 102 of FIG. 2.

Entropy decoding 302 may decode the encoded bitstream 180 and output symbols that were coded in the encoded bitstream 180. The symbols may include quantized transform coefficients and syntax elements 278. Entropy decoding 302 may reconstruct the symbols from the encoded bitstream 180. Inverse transform and inverse quantization 218 may receive quantized transform coefficients and syntax elements 278 and perform operations which are performed in the encoder. Inverse transform and inverse quantization 218 may output reconstructed predicted residues 224. Summer 222 may receive reconstructed predicted residues 224 and predicted samples 212 and generate reconstructed predicted samples 226. Depending on the prediction modes signaled in the encoded bitstream 180 (e.g., as syntax elements in quantized transform coefficients and syntax elements 278), intra-frame prediction 238 or inter-frame prediction 236 may be applied to generate predicted samples 212. In-loop filter 228 may receive reconstructed predicted samples and output decoded video 168₁.

As discussed herein, decoders such as decoder 1...D 162_{1...D}, may be modified to implement operations as illustrated in FIGS. 4, 6-9, and 11-12. A decoder may read rotation information from an encoded bit stream. A decoder may include rotation after decoding.

### Exemplary use case: shot-based encoding

FIG. 4 illustrates an example of a shot-based encoding pipeline, according to some embodiments of the disclosure. Video 404, which includes a sequence of uncompressed video frames, may be provided as input to encoding side 402. Encoding side 402 may perform encoding operations and generate an encoded bitstream of video 404. Encoding side 402 may transmit encoded bitstream data in a transport format, e.g., in the form of packets, over a network, e.g., Internet 486. Decoding side 408 may receive the packets and perform decoding operations and reconstruct the uncompressed video frames of video 404.

Video 404 may have a length or duration of more than a minute. Video 404 may have a length or duration of 2 minutes, representing a video short posted on a social media platform. Video 404 may have a length or duration of 5 minutes, representing a music video on a video streaming platform. Video 404 may have a length or duration of 45 minutes, representing an episode of a television series. Video 404 may have a length or duration of 3 hours, representing a documentary or a movie. Video 404 may have a length or duration of 5 hours, representing screen-content from a web broadcast event.

As depicted in FIG. 4, shot-based encoding may include shot detection 462, which may include the process of identifying the boundaries between shots 480 in video 404. Each shot one or more shots 480 may be encoded separately, which may help improve the overall quality of the video while maintaining reasonable size/bitrate. Shots, such as one or more shots 480, may be defined as continuous sequences of video frames that are captured by a single camera without any interruption or change in camera angle. Shots may include portions or segments of video 404 that have uniform spatial-temporal characteristics across the duration of a particular shot or the video frames of the particular shot. Shots may include different scenes of video 404 separated by scene changes. Shots may include portions or segments of video 404 that have uniform motion patterns across the duration of a shot or the video frames of the shot.

In some embodiments, shot detection 462 may implement one or more of: a digital signal processing algorithm, a computer vision algorithm, a machine learning model, and a deep learning model. Shot detection 462 may process video 404 and output one or more shots 480 of the video 404. A video may include many shots having respective subsets or sequences of uncompressed video frames. Preferably, shot detection 462 may identify one or more points where spatial-temporal characteristics of the video change substantially. Shot detection 462 may analyze content and/or signals in the uncompressed video frames to identify the one or more points in video 404. The one or more points may be considered a camera break or video edit. A camera break may include a cut. A camera break may include a gradual transition (e.g., wipe and dissolve). Shot detection 462 may detect one or more points in video 404 where there is a significant change in visual content, such as one or more changes in camera angle, lighting, and/or motion. Shot detection 462 may perform pixel-based comparisons between adjacent uncompressed frames to detect a significant change. Shot detection 462 may perform color-based comparisons between adjacent uncompressed frames to detect a significant change. Shot detection 462 may extract and compare feature embeddings using a machine learning model (e.g., a deep learning model) for adjacent uncompressed frames to detect a significant change. Shot detection 462 may perform featurebased comparisons (e.g., edges, background, detected object, etc.) between adjacent uncompressed frames to detect a significant change. Shot detection 462 may perform texturebased comparisons (e.g., edges, background, detected object, etc.) between adjacent uncompressed frames to detect a significant change. Shot detection 462 may use the one or more points to separate or segment video 404 into one or more shots 480.

Shot-based encoding may include applying different encoding techniques and/or parameters to different shots. In some cases, shot-based encoding may, for a given shot, apply one or more stages of encoding, e.g., 1^{st} stage of shot encoding 410 and 2^{nd} stage of shot encoding 416. The stages of encoding may serve as multiple passes of encoding, with a first stage to gather some information about the best way to encode the shot and a second stage to use the information to encode the shot more efficiently and optimally.

Once video 404 is divided or segmented into one or more shots 480, a shot in one or more shots 480 can be encoded in a 1^{st} stage of shot encoding 410 with one or more QPs and one or more resolutions. 1^{st} stage of shot encoding 410 may use, e.g., a very fast preset, a fast encoder, or even a hardware encoder for faster processing. 1^{st} stage of shot encoding 410 may be a coarse, crude, light, or first-pass encoder. 1^{st} stage of shot encoding 410 may implement operations illustrated in encoder 102 of FIG. 1 using a first set of encoding parameters.

A QP can include a parameter that controls the amount of compression applied to the video data during the encoding process. A higher QP value can lead to more compression and smaller file size, but also lower quality. On the other hand, a lower QP value can lead to less compression, larger file size, but higher quality.

To select a suitable subset of QP(s) and resolution(s) for a shot in one or more shots 480, an approach involving finding Convex-Hull 412 can be used. This approach may find Convex-Hull 412, which represents the minimum number of points (e.g., QPs and resolutions, or (Q, R) pairs) that enclose the possible combinations of QPs and resolutions for a given shot, while minimizing the distortion between the original and encoded video. Convex-Hull 412 may be used to select a suitable subset of QP(s) and resolution(s), in select best (Q, R) pair(s) for each shot 414. The suitable subset of possible QPs and resolutions, e.g., one or more (Q, R) pairs, may be used to encode a particular shot in one or more shots 480 of video 404 in the next stage (e.g., in the 2^{nd} stage of shot encoding 416). Other suitable optimization approaches may be used to determine the suitable subset of QP(s) and resolution(s) besides the Convex-Hull approach.

In the 2^{nd} stage of shot encoding 416, a shot of video 404 may be encoded (e.g., for a second time) at the selected QPs and resolutions from select best (Q, R) pair(s) for each shot 414. The 2^{nd} stage of shot encoding 416 may use a more sophisticated encoder than 1^{st} stage shot encoding 410 to achieve the highest possible quality. 2^{nd} stage of shot encoding 416 may be a fine, thorough, heavy-weight, or second-pass encoder. 2^{nd} stage of shot encoding 416 may implement operations illustrated in encoder 102 of FIG. 2 using a second set of encoding parameters, optionally having the selected suitable set of QP(s) and resolution(s) from select best (Q, R) pair(s) for each shot 414.

The Convex-Hull approach can be used again to determine Convex-Hull 418. Convex-Hull 418 may be used to select one or more best/optimal/suitable QP and resolution pairs for the particular shot in one or more shots 480 of video 404. The Convex-Hull approach can ensure that the encoded video maintains a high level of quality while minimizing the file size.

One or more encoded bitstreams corresponding to one or more respective (Q, R) pairs may be produced in encoding side 402. In some cases, a plurality of (Q, R) pairs may be used to generate multiple encoded bitstreams of the shot in one or more shots 480 having different resolutions and bitrates, which may form a bitrate ladder. The bitrate ladder can make the particular shot in one or more shots 480 of video 404 available over a range of bandwidth/data rates and resolutions for display on a variety of devices with different connection speeds (e.g., device 1432, device 2 436, and device 3 440).

One or more encoded bitstreams produced by encoding side 402 may be sent, e.g., over Internet 486, to be displayed to one or more users using one or more devices, e.g., device 1432, device 2 436, device 3 440, etc. One or more users can refer to the intended audience for the encoded video stream. Depending on the use case, the user could be anyone who needs to view the video content, such as a viewer watching a streaming service on their laptop, tablet, or smartphone.

The one or more encoded bitstreams may be decoded using a corresponding decoder, e.g., decode (R1, Q1) 430, decode (R2, Q2) 434, decode (R3, Q3) 438, etc. A decoder may select an encoded bitstream having a particular resolution and/or bitrate (e.g., (R1, Q1), (R2, Q2), (R3, Q3), etc.) of the bitrate ladder. R1, R2, and R3 may correspond to a first resolution, a second resolution, and a third resolution, respectively. Q1, Q2, and Q3 may correspond to a first bitrate, a second bitrate, and a third bitrate. The particular bitrate and/or resolution may be most suited for the device's display resolution and (current) connection speed. The decoder may implement operations illustrated in decoder 1 162₁ in FIG. 3.

To optimize the viewing experience for each device, the bitstream quality (e.g., bitrate and/or resolution) may be adjusted or selected statically and/or dynamically based on the capabilities of the device. For example, a laptop with a larger display and higher processing power may be capable of displaying higher quality video (higher bitrate) with a higher resolution. On the other hand, a smartphone with a smaller screen and lower processing power may only be capable of displaying lower quality video (lower bitrate) with a lower resolution.

To adjust the bitstream quality for different devices, one or more encoded bitstreams may be transmitted or transported, in a transport format, using adaptive streaming protocols such as Hypertext Transfer Protocol (HTTP) Live Streaming (HLS) or Dynamic Adaptive Streaming over HTTP (DASH), e.g., over Internet 486. These protocols may allow the video to be delivered in small chunks or segments of varying quality, allowing the device to select the appropriate quality level based on its capabilities and network conditions. For example, one or more encoded bitstreams may have multiple versions, each with different bitrates and resolutions. When a user, who is using a device, requests to view the video on their device, the device's client software selects the appropriate version of the one or more encoded bitstreams based on the available network bandwidth and the device's capabilities. The process can ensure that the video is displayed at the highest quality possible while avoiding buffering or other playback issues.

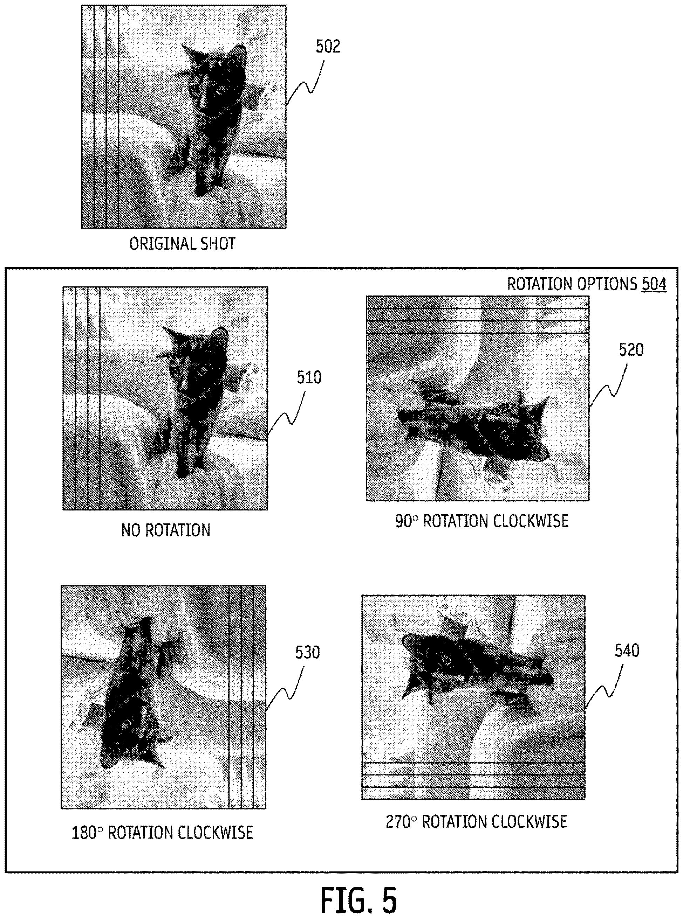

Encoding side 402 such as algorithms in 1^{st} stage of shot encoding 410 and 2^{nd} stage of shot encoding 416, may be optimized or tuned to encode one or more shots 480 that include primarily horizontal motion. To address this issue, encoding side 402 and decoding side 408 may be augmented to be orientation-aware. As described in FIGS. 5-12, encoding side 402 and decoding side 408 may include rotation of shots prior to encoding and after decoding.

FIG. 5 illustrates exemplary rotation options 504 of a shot, according to some embodiments of the disclosure. A video to be encoded may include uncompressed video frames. The video may be segmented into one or more shots. Original shot 502, an example of one or more shots, may include a subset of the uncompressed video frames of the video. The subset of uncompressed video frames of the video may have one or more uniform spatial-temporal characteristics, such as camera angle, camera motion, and object motion. A different shot of the video (not depicted) may have one or more uniform spatial-temporal characteristics that are different from the one or more spatial-temporal characteristics of original shot 502. Original shot 502, in this example, comprises a sequence of uncompressed video frames capturing a cat on a couch from a first camera angle. A different shot of the video (not depicted) may include a different sequence of uncompressed video frames. An example of a different shot of the video may include a different sequence of uncompressed video frames capturing a robotic vacuum on the floor from a second camera angle. A camera cut may separate original shot 502 and the different shot of the video.

Rotation options 504 may include no rotation. The orientation of original shot 502 is preserved or unaltered. The (no rotation) uncompressed video frames are illustrated as no rotation shot 510.

Exemplary rotation options 504 may include a clockwise rotation of 90 degrees, or equivalently, a counter-clockwise rotation of 270 degrees. The uncompressed video frames of original shot 502 can be rotated clockwise by 90 degrees, or equivalently, a counter-clockwise rotation of 270 degrees. The rotated uncompressed video frames are illustrated as rotated shot 520.

Exemplary rotation options 504 may include a clockwise rotation of 180 degrees, or equivalently, a counter-clockwise rotation of 180 degrees. The uncompressed video frames of original shot 502 can be rotated clockwise by 180 degrees, or equivalently, a counter-clockwise rotation of 180 degrees. The rotated uncompressed video frames are illustrated as rotated shot 530.

Exemplary rotation options 504 may include a clockwise rotation of 270 degrees, or equivalently, a counter-clockwise rotation of 90 degrees. The uncompressed video frames of original shot 502 can be rotated clockwise by 180 degrees, or equivalently, a counter-clockwise rotation of 90 degrees. The rotated uncompressed video frames are illustrated as rotated shot 540.

One or more ones of rotation options 504 may correspond to a set of one or more sequence rotation index values. The set of the one or more sequence rotation index values can depend on the implementation and/or application. The set of the one or more sequence rotation index values may be determined or defined based on whether rotation options are allowed, and which rotation options are allowed.

Taking the example of an AV1 encoded bitstream, information applicable to a shot can be incorporated into a sequence header. A sequence header provides information about how to decode a specific sequence of video frames, which may follow the sequence header in the encoded bitstream. The sequence of video frames may make up at least a portion of a shot. The information applicable to a shot or a sequence of video frames making up a shot, such as rotation information, e.g., as indicated by a sequence rotation index value, can be appropriately included in a sequence header. A sequence header may include (header) signaling information that is to be applied to a sequence of video frames, such as a sequence of video frames that correspond to a shot such as original shot 502. A sequence header may include (header) signaling information that is to be applied to a sequence of encoded video frames. Other types of headers, e.g., frame header, may be used to include (header) signaling information that is to be applied to other types of data units, e.g., a frame.

When an encoded bitstream is in a transport format, the encoded bitstream has a series of packets. A sequence header may be put into a sequence header packet. AV1 has a structure called "Sequence Header OBU" (OBU stands for Open Bitstream Unit), which may be used as the sequence header packet to carry the sequence header information in the encoded bitstream. The sequence header information in the sequence header packet may be extracted and used by the decoder to properly decode the shot, or the sequence of video frames of a shot. In other words, the sequence header information is carried in a sequence header OBU, which has information that is to be applied to a particular shot, or the sequence of video frames of the particular shot. Specifically, the sequence header may be transported as a packet in OBU format, or a Sequence Header OBU in AV1, and is a part of an encoded bitstream. A packet in OBU format may include a header and a payload.

The header of an OBU packet may include one or more of:
- one or more bits to indicate a type of OBU packet,
- a bit to flag whether extension is used,
- a bit to indicate whether the packet has a size field,
- one or more bits to indicate a temporal identifier, and
- one or more bits to indicate a spatial identifier.

A payload of an OBU packet may include one or more of:
- one or more bits to indicate a size of the packet, and
- one or more bits to encode data, e.g., syntax elements, quantized transform coefficients, etc.

A sequence header packet may include a header that has one or more bits to indicate that the packet is a sequence header packet. The header may indicate that the packet is a sequence header packet (type).

A sequence header packet may include a payload that has one or more bits to encode one or more syntax elements. The one or more syntax elements may be extracted, used, and applied by a decoder to decode a sequence of video frames, such as a sequence of video frames making up at least a portion of a shot.

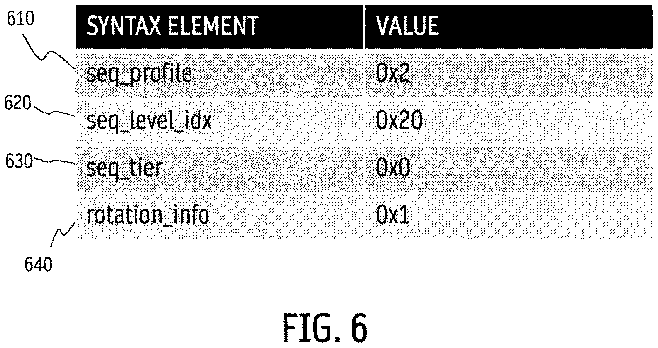

FIG. 6 illustrates an example of syntax elements, according to some embodiments of the disclosure. A syntax element can be synonymous as a parameter or variable. The example of syntax elements may be included in a payload of a sequence header packet. One way to incorporate the rotation information is to add a syntax element to the sequence header. This syntax element can be named "rotation_info" (or the like). The syntax element can indicate one or more rotation parameters for each shot in the video. For example, if the video has a shot that needs to be rotated 90 degrees clockwise, the syntax elements for the shot in the sequence header may appear as illustrated in FIG. 6, where "rotation_info" = value 0x1. The "rotation_info" syntax element may be a custom syntax element added to the sequence header to indicate the rotation parameter for the video shot. The value "0x1" (or a suitable value) in the "rotation_info" element may indicate that that this shot is to be rotated 90 degrees clockwise (represented by "1"). In some embodiments, four rotation options may be indicated by values "0x0", "0x1", "0x2", and "0x3", signaling the exemplary rotation options 504 in FIG. 5.

Exemplary syntax elements for a sequence header may include one or more of: sequence profile syntax element 610 ("seq_profile"), sequence level index syntax element 620 ("seq_level_idx"), sequence tier syntax element 630 ("seq_tier"), and sequence rotation syntax element 640 ("rotation_info").

In this example, one or more of the syntax elements, e.g., sequence profile syntax element 610 ("seq_profile"), sequence level index syntax element 620 ("seq_level_idx"), and sequence tier syntax element 630 ("seq_tier") can be a part of the payload of a sequence header packet. Sequence profile syntax element 610 ("seq_profile"), sequence level index syntax element 620 ("seq_level_idx"), and sequence tier syntax element 630 ("seq_tier") and can used to specify the profile, level, and tier of the video shot, respectively.

For sequence profile syntax element 610, a sequence profile index value can be set to indicate a sequence profile having one or more of: bit depth, monochrome support, chroma subsampling. For sequence level index syntax element 620, a sequence level index value can be set to indicate a sequence level having one or more of: maximum picture size, maximum H size, maximum V size, maximum display rate, maximum decode rate, maximum header rate, main megabits per second, high megabits per second, main compressed ratio, high compressed ratio, maximum tiles, and maximum tile columns. For sequence tier syntax element 630, a sequence tier index value can be set to indicate a (sequence) tier within the sequence level (e.g., high, normal, low, etc.)

The one or more syntax elements, e.g., sequence rotation syntax element 640 ("rotation_info") can be used to signal rotation information, such as to signal which one of the rotation options was applied in the encoder side. Possible rotation options are illustrated in FIG. 5. For example, a sequence rotation index value may be set for sequence rotation syntax element 640 ("rotation_info") to indicate rotation information, e.g., how, if performed, the shot or sequence of video frames was rotated prior to encoding. A decoder extracting the sequence rotation index value may use the sequence rotation index value to rotate a sequence of decoded frames after decoding.

In some examples, the sequence rotation index value may be coded as one bit and can include an index value selected from two possible index values. The two possible index values may be a 0 or 1. In some embodiments, the two possible index values may include a first index value indicating a clockwise rotation of 90 degrees (illustrated by rotated shot 520 of FIG. 5), and a second index value indicating a counter-clockwise rotation of 90 degrees (illustrated by rotated shot 540). In some embodiments, the two possible index values may include a first index value indicating a clockwise rotation of 90 degrees (illustrated by rotated shot 520 of FIG. 5), and a second index value indicating a clockwise rotation of 180 degrees (illustrated by rotated shot 530). The absence of the sequence rotation syntax element may indicate no rotation. The absence of the sequence rotation syntax element may indicate a same rotation as a previously signaled rotation option.

In some examples, the sequence rotation index value may be coded as two bits and can include an index value selected from four possible index values. The four possible index values may be a 0 or 1. In some embodiments, the four possible index values may include a first index value indicating no rotation, a second index value indicating a clockwise rotation of 90 degrees, a third index value indicating a clockwise rotation of 180 degrees, and a fourth index value indicating a clockwise rotation of 270 degrees.

By incorporating the rotation information into the sequence header, the decoder can properly display the video, e.g., without requiring any additional metadata or processing. The decoder can read the "rotation_info" syntax element from the sequence header, e.g., as illustrated in FIG. 6 and use the rotation information to rotate each shot as needed during the decoding process, e.g., after the shot has been decoded and turned into a sequence of decoded/reconstructed video frames.

As an application example, this approach can be particularly beneficial in the context of shot-based encoding, where each shot can have its own unique rotation information and each shot may be encoded separately, allowing for more efficient and accurate encoding of each shot. As discussed with FIG. 4, shot-based encoding is a technique used in video encoding that breaks down a video into shots, which are groups of frames that share similar spatial-temporal characteristics, such as camera angle, camera motion and object motion. This allows for more efficient encoding of each shot, as the encoder can adapt its encoding parameters to better suit the specific characteristics of that shot. By incorporating rotation information into the video bitstream itself, in a manner illustrated in FIG. 6, the approach can help ensure that the decoder has the information to correctly display the video, especially when dealing with gaming and screen contents.

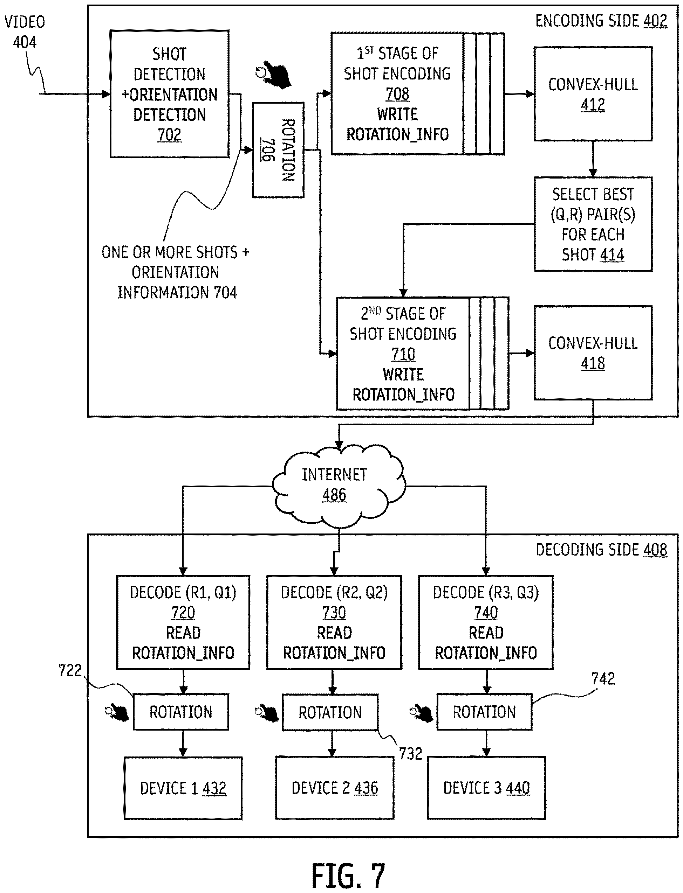

FIGS. 7-9 illustrate different encoder side 402 and decoder side 408 implementation which incorporate per-shot rotation. Encoder side 402 may implement a suitable technique for determining rotation information. Decoder side 408 may implement extraction of rotation information and applying rotation according to the rotation information. Decoder side 408 may be agnostic to the specific technique used for determining rotation information. As depicted in FIGS. 7-8, shot-based encoding pipeline (e.g., encoding side 402) and decoding pipeline (e.g., decoding side 408) can incorporate rotation information in the encoded bitstream.

FIG. 7 illustrates an example of shot-based encoding pipeline with orientation detection and rotation option, according to some embodiments of the disclosure. Encoding side 402 may receive an uncompressed video 404 having one or more shots. Shot detection in shot detection + orientation detection 702 may segment video 404 into one or more shots, e.g., comprising a first shot, a second shot, a third shot, etc. Shot detection may determine the one or more shots of the video 404 based on spatial-temporal characteristics of the uncompressed video frames of the video 404. A first shot may include a first subset of the uncompressed video frames having one or more uniform spatial-temporal characteristics.

Besides shot detection (performed in a manner discussed in FIG. 4), encoding side 402 may include orientation detection, in shot detection + orientation detection 702. A process, e.g., orientation detection or direction of motion estimation, may be added on top of shot detection process in the encoding side 402. The process may be added in the video encoding pipeline during or after the shot detection phase. This additional process may involve selecting the optimal orientation (or a degree of rotation) for each shot based on the spatial-temporal characteristics of the shot (e.g., the motion within the shot). Orientation detection, in shot detection + orientation detection 702, may detect a first orientation of movement of the first shot in the one or more shots. Orientation detection, in shot detection + orientation detection 702, may detect on a per-shot basis, an orientation of movement of the one or more shots. In some cases, orientation detection may determine characteristics or features in a shot that may indicate a direction and/or orientation of motion or movement in the shot. For a shot, the direction and/or orientation of motion or movement may be uniform across the sequence of video frames forming a shot. The direction and/or orientation of motion or movement may be measured relative to an angle from a horizontal axis. The degree of rotation may depend on an amount of rotation that would cause the orientation of motion or movement to be (predominately) horizontal after rotation of the shot. The degree of rotation may depend on the amount of rotation (selected from the rotation options available) that would cause a rotated shot to have more horizontal motion. The direction and/or orientation of motion or movement may be measured as a ratio of vertical movement and horizontal movement. The direction and/or orientation of motion or movement may be measured based on whether there is a greater amount or proportion or magnitude of vertical movement than horizontal movement in the shot, or across the video frames of the shot. Vertical movement may include up and down movement along a vertical axis. Horizontal movement may include left and right movement along a horizontal axis. A direction and/or orientation of motion or movement may include a vector having a vertical and horizontal component. Shot detection + orientation detection 702 may output one or more shots and orientation information corresponding to the one or more shots, as one or more shots + orientation information 704. In some cases, shot detection + orientation detection 702 can determine the degree of rotation based on the orientation information, and may output one or more shots and degree of rotation (or indication of a rotation option) corresponding to the one or more shots, as one or more shots + orientation information 704.

Once the orientation and/or suitable degree of rotation has been determined in shot detection + orientation detection 702, the input video 404 can be rotated in rotation 706 accordingly prior to the 1^{st} stage of shot encoding 708 and/or the 2^{nd} stage of shot encoding 710, if appropriate. Every video frame in video 404 is rotated by a same amount in rotation 706. The orientation and/or suitable degree of rotation may be provided from shot detection + orientation detection 702 to rotation 706. The orientation and/or suitable degree of rotation may be provided from shot detection + orientation detection 702 to an encoder. In some cases, rotation is (only) applied by rotation 706 if the suitable degree of rotation is different from zero. Rotation is applied by rotation 706 if the degree of rotation is different from zero (e.g., 90 degrees, 180 degrees, and 270 degrees). Rotation 706 may rotate first uncompressed video frames of the first shot based on the first orientation of movement to obtain first rotated uncompressed video frames. The rotation applied (e.g., the rotation information) by rotation 706 may be provided to the encoder. In some cases, rotation 706 may select a first sequence rotation index value based on the first orientation of movement and/or the rotation applied in 706. Rotation 706 may provide the first sequence rotation index value to the encoder. In some cases, the encoder may determine the first sequence rotation index value based on the rotation information and/or the first orientation of movement provided by shot detection + orientation detection 702 and/or rotation 706.

In the example shown for shot-based encoding, the encoding pipeline in encoding side 402 may include 1^{st} stage of shot encoding 708 and/or the 2^{nd} stage of shot encoding 710. Not all shot-based encoding techniques have multiple stages. In some cases, shot-based encoding can be performed in one stage. The encoder pipeline may receive the first rotated uncompressed video frames of the first shot and transform the first rotated uncompressed video frames into an encoded bitstream having the rotation information. 1^{st} stage of shot encoding 708 and/or the 2^{nd} stage of shot encoding 710 of the encoder side 402 may encode the first rotated uncompressed video frames to obtain first encoded video data. 1st stage of shot encoding 708 may be implemented in a similar fashion as 1st stage of shot encoding 410 of FIG. 4. 2^{nd} stage of shot encoding 710 may be implemented in a similar fashion as 2^{nd} stage of shot encoding 416.

In some embodiments, 1^{st} stage of shot encoding 708 and/or the 2^{nd} stage of shot encoding 710 of the encoder side 402 can (individually) apply operations illustrated for encoder 102. 1^{st} stage of shot encoding 708 and/or the 2^{nd} stage of shot encoding 710 of the encoder side 402 can apply partitioning of the first rotated uncompressed video frames to obtain first blocks (e.g., illustrated as partitioning 206 of FIG. 2). 1^{st} stage of shot encoding 708 and/or the 2^{nd} stage of shot encoding 710 of the encoder side 402 can apply intra-frame prediction or inter-frame prediction to the first blocks to obtain predicted residues (e.g., illustrated as intra-frame prediction 238 and inter-frame prediction 236 of FIG. 2). 1^{st} stage of shot encoding 708 and/or the 2^{nd} stage of shot encoding 710 of the encoder side 402 can apply transformation and quantization to the predicted residues to obtain quantized transform coefficients and syntax elements (e.g., illustrated as transform and quantization 214 of FIG. 2). 1^{st} stage of shot encoding 708 and/or the 2^{nd} stage of shot encoding 710 of the encoder side 402 can apply entropy coding to the quantized transform coefficients and syntax elements (e.g., illustrated as entropy coding 216 of FIG. 2).

In some embodiments, the rotated uncompressed video frames may be encoded using a two-stage process, such as using 1^{st} stage of shot encoding 708 and/or the 2^{nd} stage of shot encoding 710 of the encoder side 402. 1^{st} stage of shot encoding 708 may perform a first stage coarse encoding of the first rotated uncompressed video frames to obtain first coarsely encoded video data. A Convex-Hull approach (e.g., involving Convex-Hull 412 and select best (Q, R) pair(s) for each shot 414) can be used to determine one or more parameters that reduces or minimizes distortion in the first coarsely encoded video data. 2^{nd} stage of shot encoding 710 may perform a second stage fine encoding of the first rotated uncompressed video frames using the one or more parameters to obtain the first encoded video data.

During encoding, the rotation information (e.g., a sequence rotation index value) can be determined and included in the encoded bitstream by 1^{st} stage of shot encoding 708 and/or the 2^{nd} stage of shot encoding 710 alongside the encoded video data. The rotation information can be included in a sequence header. For example, in the 1^{st} stage of shot encoding 708, a sequence rotation index value may be written into sequence rotation syntax element, rotation_info, of the sequence header, e.g., a sequence header packet, of an encoded bitstream. In the 2^{nd} stage of shot encoding 710, a sequence rotation index value may be written into sequence rotation syntax element, rotation_info, of the sequence header, e.g., a sequence header packet, of an encoded bitstream. The sequence header may be used to signal information for decoding and rotating a particular shot.

1^{st} stage of shot encoding 708 and/or the 2^{nd} stage of shot encoding 710 may write, into an encoded bitstream, a first sequence header packet having one or more first syntax elements in a first payload of the first sequence header packet. The one or more first syntax elements are to be applied by a decoder (a decoder in decoding side 408) to decode the first shot. The one or more first syntax elements can include a first sequence rotation index value corresponding to the first orientation of movement, as illustrated in FIG. 6. 1^{st} stage of shot encoding 708 and/or the 2^{nd} stage of shot encoding 710 may write, into the encoded bitstream, the first encoded video data as frame packets.

The sequence rotation syntax element, rotation_info, may serve as a signal to the decoder in decoding side 408 that specifies the degree of rotation to correctly display the video (e.g., to rotate the shot back to its original orientation, to reverse the rotation operation performed in encoding side 402). By including rotation information in the encoded bitstream, e.g., in the sequence header as a syntax element, the decoder in decoding side 408 can adjust the shot's orientation according to the rotation information, after the shot has been decoded. As illustrated in FIG. 7, decoding side 408 may include one or more of: decode (R1, Q1) 720, decode (R2, Q2) 730, and decode (R3, Q3) 740. Decode (R1, Q1) 720, decode (R2, Q2) 730, and decode (R3, Q3) 740 may be implemented similarly to decode (R1, Q1) 430, decode (R2, Q2) 434, and decode (R3, Q3) 438 of FIG. 4. Decode (R1, Q1) 720, decode (R2, Q2) 730, and decode (R3, Q3) 740 may include a read operation to extract rotation information, e.g., sequence rotation index value of a sequence rotation syntax element, from sequence headers in the encoded bitstream. Decoding side 408 may include one or more of: rotation 722, rotation 732, and rotation 742. Decode (R1, Q1) 720, decode (R2, Q2) 730, and decode (R3, Q3) 740 may include provide rotation information or a derivation thereof to rotation 722, rotation 732, and rotation 742 for a particular shot, respectively, so that rotation 722, rotation 732, and rotation 742 may appropriately reverse the rotation operation performed in rotation 706. During the decoding process on decoding side 408, the rotation information can be read, and rotation may be applied to decoded/reconstructed video frames based on the rotation information after the decoding process. Device 1432, device 2 436, and device 3 440 may display or output rotated decoded/reconstructed video frames to users.

In some embodiments, a decoder (e.g., decode (R1, Q1) 720, decode (R2, Q2) 730, and decode (R3, Q3) 740) may receive an encoded bitstream, e.g., via Internet 486. The encoded bitstream may be generated by encoding side 402. The encoded bitstream can include a first packet and frame packets having a first sequence of encoded video frames. The first sequence of encoded video frames may correspond to a first shot of video 404. The first packet comprises a first header, and a first payload. The first packet may be a sequence header packet. The first packet may be in an OBU format. The first payload can include one or more first syntax elements that are to be applied, by the decoder, to the first sequence of encoded video frames. The one or more first syntax elements may include a first sequence rotation index value. The decoder may decode the first sequence of encoded video frames according to the one or more first syntax elements to obtain a first sequence of decoded video frames. The decoder may implement operations such as operations shown in decoder 1 162₁ of FIG. 3. The decoder or a rotation operator (e.g., rotation 722, rotation 732, and rotation 742) may rotate the first sequence of decoded video frames according to the first sequence rotation index value. The decoder or a rotation component may determine a degree of rotation to reverse the rotation applied in rotation 706 based on the first sequence rotation index value. The decoder or a rotation operator may use the degree of rotation to rotate the first sequence of decoded video frames. The rotation operator may produce a rotated version of the sequence of decoded video frames, and a device (e.g., device 1432, device 2436, and device 3 440) may display the rotated version to a user.

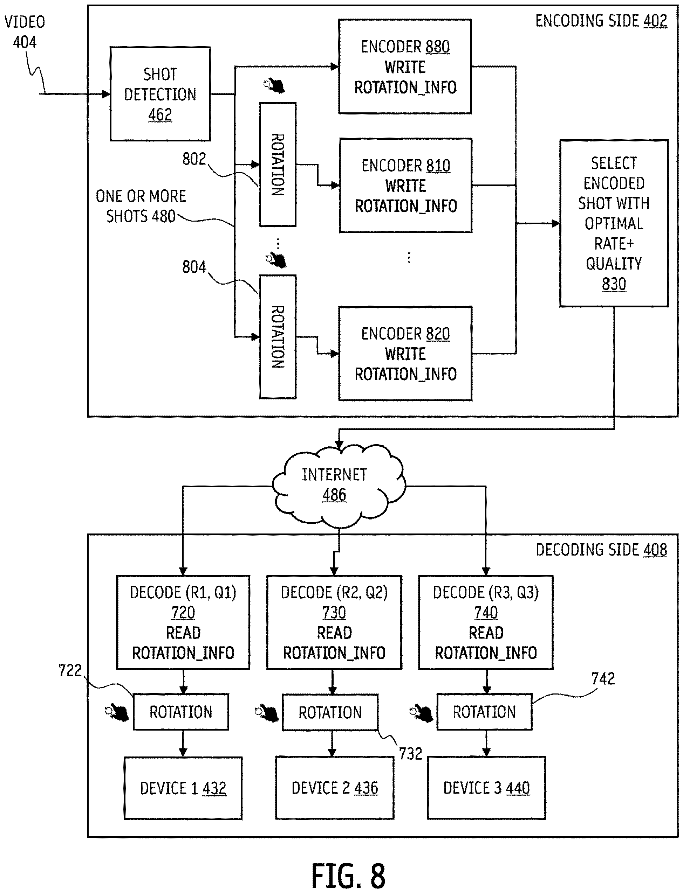

FIG. 8 illustrates selecting a rotation option for a shot, according to some embodiments of the disclosure. In some cases, encoding side 402 may process a shot in one or more shots 480 and produce different versions of the shot utilizing no rotation operator or a rotation operator to apply different rotation options (e.g., such as rotation options 504 of FIG. 5). The different versions may be processed using (parallel) encoders to generate different encoded bitstreams. The encoded bitstreams may having the corresponding rotation information written into the sequence header of the encoded bitstream. A process may select an encoded bitstream of the shot with optimal rate and/or quality (e.g., resolution) to be used and transmitted as the encoded bitstream.

Encoding side 402 may include one or more rotation operators able to perform rotation according to one or more rotation options. Encoding side 402 may have a path without a rotation operator to effectively implement a "no rotation" rotation option. For example, rotation 802 may perform rotation according to a first rotation option. Rotation 804 may perform rotation according to a second rotation option. Another rotation operator (not shown) may be included to perform rotation according to a third rotation option. A rotation operator may rotate uncompressed video frames of a shot according to a specific rotation option.

The (parallel) encoders may include encoder 880, encoder 810, and encoder 820. Encoder 880 may receive uncompressed video frames of a shot (no rotation applied) and encode the uncompressed video frames. Encoder 810 may receive and encode rotated uncompressed video frames of a shot from rotation 802. Encoder 820 may receive and encode rotated uncompressed video frames of a shot from rotation 804. The encoders may implement operations as illustrated in encoder 102 of FIG. 2 to generate respective encoded bitstreams. In some cases, the encoders may write the corresponding rotation information in a sequence header packet in the respective encoded bitstreams.

For example, encoder 880 may encode first uncompressed video frames of a first shot of the one or more shots to obtain first encoded video data or a first encoded bitstream having the first encoded video data. Rotation 802 may rotate the first uncompressed video frames of the first shot (e.g., by a first amount) to obtain first rotated uncompressed video frames of the first shot. Encoder 810 may encode the first rotated uncompressed video frames of the first shot to obtain second encoded video data or a second encoded bitstream having the second encoded video data.

Select encoded shot with optimal rate + quality 830 may analyze the respective encoded bitstreams produced by the (parallel) encoders. Select encoded shot with optimal rate + quality 830 can compare quality and/or size of the first encoded video data and the second encoded video data. Select encoded shot with optimal rate + quality 830 can determine which rotation option may have resulted in the smallest size or lowest bitrate for the same resolution. Select encoded shot with optimal rate + quality 830 can determine which rotation option may have resulted in the least amount of distortion or degradation in visual quality. Select encoded shot with optimal rate + quality 830 may select one of the encoded bitstreams, e.g., a first encoded bitstream and the second encoded bitstream, based on the comparing and/or analysis. The selected one of the encoded bitstreams, e.g., a selected one of the first encoded bitstream and the second encoded bitstream may be transmitted, e.g., over Internet 486, to a decoder in decoding side 408 for processing (whose details are described in FIG. 7). The selected one of the encoded bitstreams may have a first sequence header packet having one or more first syntax elements in a first payload of the first sequence header packet. The one or more first syntax elements are to be applied by a decoder to decode the first shot. The one or more first syntax elements may include a first sequence rotation index value indicating an amount of rotation applied prior to the encoding. For example, if the first encoded bitstream was selected for transmission, the first sequence rotation index value may correspond to no rotation or indicate no rotation was applied prior to encoding. If the second encoded bitstream was selected for transmission, the first sequence rotation index value may correspond to or indicate rotation by the first amount was applied prior to encoding.

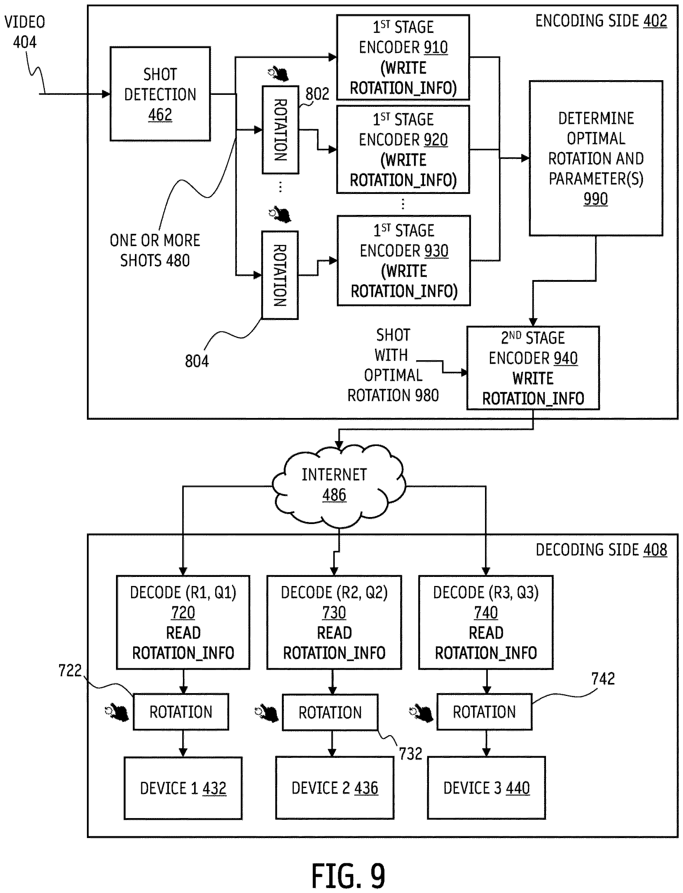

FIG. 9 illustrates selecting a rotation option for a shot, according to some embodiments of the disclosure. Implementation can be similar to the encoder side 402 of FIG. 8. Encoding side 402 includes one or more rotation operators as illustrated in FIG. 8. No rotation operator (e.g., a direct path) or a suitable rotation operator may produce different versions of the shot with different rotation options (e.g., such as rotation options 504 of FIG. 5). The different versions may be processed using (parallel) 1^{st} stage encoders (e.g., 1^{st} stage encoder 910, 1^{st} stage encoder 920, and 1^{st} stage encoder 930) to generate different encoded bitstreams. The 1^{st} stage encoders in FIG. 9 may be implemented similarly to 1^{st} stage shot encoding 708 of FIG. 7. The encoded bitstreams may have corresponding rotation information written into the sequence header of the encoded bitstream. A process may select an optimal rotation option and optionally one or more parameter(s) based on the different encoded bitstreams. A shot with the selected optimal rotation option and optionally the one or more parameters may be encoded into a final/optimal encoded bitstream with a second stage encoder (e.g., 2^{nd} stage encoder 940). The 2^{nd} stage encoder 940 may be implemented similarly to 2^{nd}' stage shot encoding 710 of FIG. 7. The final/optimal encoded bitstream may have the appropriate sequence rotation index value corresponding to the optimal rotation option (e.g., the amount of rotation applied prior to encoding) in a syntax element of a sequence header packet.

In some embodiments, determine optimal rotation and one or more parameter(s) 990 may determine one or more parameters based on the different encoded bitstreams produced by the (parallel) 1^{st} stage encoders. A Convex-Hull approach may be applied to determine the one or more parameters (in a similar manner discussed in FIG. 4) that may optimize encoding results of the shot. In some embodiments, determine optimal rotation and one or more parameter(s) 990 may which rotation option applied prior to the encoding resulted in better encoding results of the shot.

Based on the optimal rotation option, the uncompressed video frames having the optimal rotation option (shown as shot with optimal rotation 980) may be provided as input to 2^{nd} stage encoder 940. 2^{nd} stage encoder 940, may utilize the one or more parameters determined by determine optimal rotation and one or more parameter(s) 990 in the encoding process to obtain a final/optimal encoded bitstream. 2^{nd} stage encoder 940 may, during the encoding process, write a sequence rotation index value corresponding to the optimal rotation option (e.g., the amount of rotation applied to obtain shot with optimal rotation 980) in a syntax element of a sequence header packet.

### Methods for orientation-aware decoding and methods for orientation-aware encoding

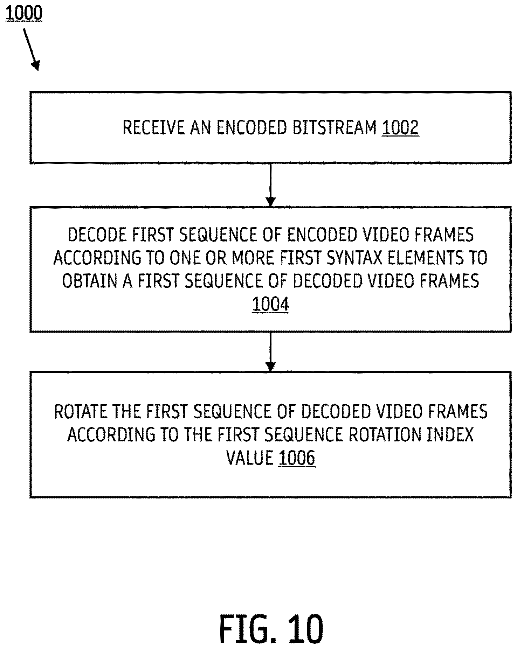

FIG. 10 depicts a flow diagram of an exemplary method 1000 for orientation-aware decoding, according to some embodiments of the disclosure. The method 1000 may be implemented in a decoder side, such as decoder side 406 of the FIGS.

In 1002, an encoded bitstream may be received. The encoded bitstream may include a first packet and frame packets having a first sequence of encoded video frames. The first packet may include a first header, and a first payload. The first payload may include one or more first syntax elements that are to be applied to the first sequence of encoded video frames. The one or more first syntax elements can include a first sequence rotation index value. The first sequence rotation index value may indicate rotation information. The first sequence rotation index value may indicate an amount of rotation prior to encoding. The first sequence rotation index value whether and how much rotation is to be applied after decoding.

In 1004, the first sequence of encoded video frames may be decoded according to the one or more first syntax elements to obtain a first sequence of decoded video frames.

In 1006, the first sequence of decoded video frames may be rotated according to the first sequence rotation index value. In some cases, no rotation is applied if the first sequence rotation index value indicates no rotation was applied prior to encoding.

The method 1000 may be applied on a shot-by-shot basis. The encoded bitstream may include a second packet and further frame packets having a second sequence of encoded video frames. The second packet can include a second header, and a second payload. The second payload can include one or more second syntax elements that are to be applied to the second sequence of encoded video frames. The one or more second syntax elements can include a second sequence rotation index value that may or may not be different from the first sequence rotation index value. The second sequence of encoded video frames may be decoded according to the one or more second syntax elements to obtain a second sequence of decoded video frames. The second sequence of decoded video frames may be rotated according to the second sequence rotation index value.

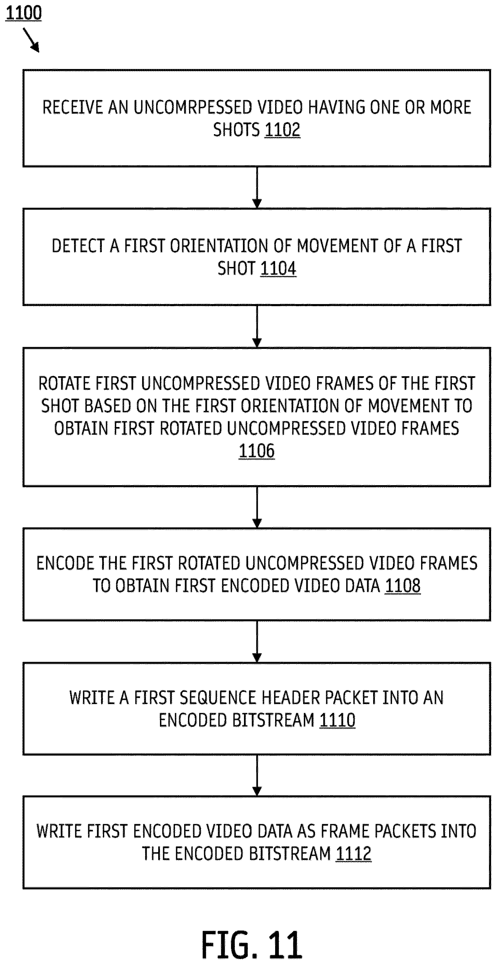

FIG. 11 depicts a flow diagram of an exemplary method 1100 for orientation-aware decoding, according to some embodiments of the disclosure. The method 1100 may be implemented in a decoder side, such as encoder side 402 of the FIGS.

In 1102, an uncompressed video having one or more shots may be received.

In 1104, a first orientation of movement of a first shot in the one or more shots may be detected.

In 1106, first uncompressed video frames of the first shot may be rotated based on the first orientation of movement to obtain first rotated uncompressed video frames. In some cases, the first compressed video frames may not be rotated if it is determined that the first orientation does not warrant rotation.

In 1108, the first rotated uncompressed video frames may be encoded obtain first encoded video data.

In 1110, a first sequence header packet may be written into an encoded bitstream. The first sequence header packet may have one or more first syntax elements in a first payload of the first sequence header packet. The one or more first syntax elements are to be applied by a decoder to decode the first shot. The one or more first syntax elements may include a first sequence rotation index value corresponding to the first orientation of movement.

In 1112, the first encoded video data may be written into the encoded bitstream as frame packets.

The method 1100 may be applied on a shot-by-shot basis. A second orientation of movement of a second shot in the one or more shots may be detected. The second orientation of movement can be different from the first orientation of movement. Second uncompressed video frames of the second shot may be rotated based on the second orientation of movement to obtain second rotated uncompressed video frames. The second rotated uncompressed video frames may be encoded to obtain second encoded video data. A second sequence header packet may be written into the encoded bitstream. The second sequence header packet may have one or more second syntax elements in a second payload of the second sequence header packet. The one or more second syntax elements are to be applied by the decoder on the second encoded video data. The one or more second syntax elements can include a second sequence rotation index value corresponding to the second orientation of movement. The second encoded video data may be written into the encoded bitstream as further frame packets.

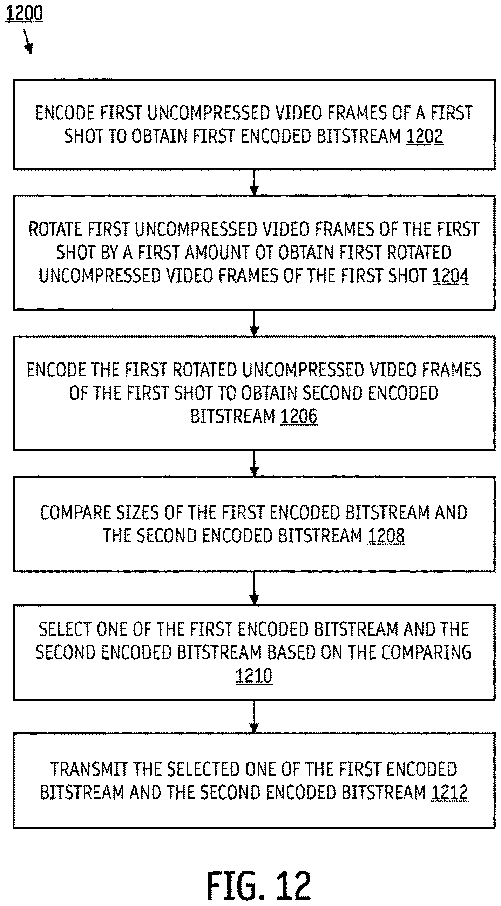

FIG. 12 depicts a flow diagram of an exemplary method 1200 for orientation-aware decoding, according to some embodiments of the disclosure. The method 1200 may be implemented in a decoder side, such as encoder side 402 of the FIGS.

In 1202, first uncompressed video frames of a first shot of one or more shots of a video may be encoded to obtain a first encoded bitstream.

In 1204, the first uncompressed video frames of the first shot may be rotated by a first amount to obtain first rotated uncompressed video frames of the first shot.

In 1206, the first rotated uncompressed video frames of the first shot may be encoded to obtain a second encoded bitstream.

In 1208, sizes (and/or qualities) of the first encoded bitstream and the second encoded bitstream may be compared.

In 1210, an encoded bitstream of the first encoded bitstream and the second encoded bitstream may be selected based on the comparing.

In 1212, the selected encoded bitstream in 1210 may be transmitted, e.g., to a decoder or device. The selected encoded bitstream in 1210 may include a first sequence header packet having one or more first syntax elements in a first payload of the first sequence header packet. The one or more first syntax elements are to be applied by a decoder to decode the first shot. The one or more first syntax elements can include a first sequence rotation index value indicating an amount of rotation applied prior to the encoding.

The method 1200 may be applied on a shot-by-shot basis. Second uncompressed video frames of a second shot of the one or more shots of the video may be encoded to obtain a third encoded bitstream. The second uncompressed video frames of the second shot may be rotated by the first amount to obtain third rotated uncompressed video frames of the second shot. The third rotated uncompressed video frames of the first shot may be encoded to obtain a fourth encoded bitstream. Sizes (and/or qualities) of the third encoded bitstream and the fourth encoded bitstream may be compared.

### Exemplary computing device

FIG. 13 is a block diagram of an apparatus or a system, e.g., an exemplary computing device 1300, according to some embodiments of the disclosure. One or more computing devices 1300 may be used to implement the functionalities described with the FIGS. and herein. A number of components are illustrated in the FIGS. can be included in the computing device 1300, but any one or more of these components may be omitted or duplicated, as suitable for the application. In some embodiments, some or all of the components included in the computing device 1300 may be attached to one or more motherboards. In some embodiments, some or all of these components are fabricated onto a single system on a chip (SoC) die. Additionally, in various embodiments, the computing device 1300 may not include one or more of the components illustrated in FIG. 4, and the computing device 1300 may include interface circuitry for coupling to the one or more components. For example, the computing device 1300 may not include a display device 1306, and may include display device interface circuitry (e.g., a connector and driver circuitry) to which a display device 1306 may be coupled. In another set of examples, the computing device 1300 may not include an audio input device 1318 or an audio output device 1308 and may include audio input or output device interface circuitry (e.g., connectors and supporting circuitry) to which an audio input device 1318 or audio output device 1308 may be coupled.

The computing device 1300 may include a processing device 1302 (e.g., one or more processing devices, one or more of the same type of processing device, one or more of different types of processing device). The processing device 1302 may include electronic circuitry that process electronic data from data storage elements (e.g., registers, memory, resistors, capacitors, quantum bit cells) to transform that electronic data into other electronic data that may be stored in registers and/or memory. Examples of processing device 1302 may include a central processing unit (CPU), a graphical processing unit (GPU), a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1300 may include a memory 1304, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1304 includes one or more non-transitory computer-readable storage media. In some embodiments, memory 1304 may include memory that shares a die with the processing device 1302. In some embodiments, memory 1304 includes one or more non-transitory computer-readable media storing instructions executable to perform operations described herein, such as operations illustrated in FIGS 1-4 and 7-12, method 1000, method 1100, and method 1200. and herein. Memory 1304 may include one or more non-transitory computer-readable media storing instructions executable to perform operations associated with orientation-aware encoding (e.g., operations performed in encoder side 402) and/or orientation-aware decoding (e.g., operations performed in decoder side 406). Memory 1304 may include one or more non-transitory computer-readable media storing instructions executable to perform operations associated with determining rotation information and/or rotation parameters of a shot. Memory 1304 may include one or more non-transitory computer-readable media storing instructions executable to perform operations associated with shot-based encoding with rotation option. Memory 1304 may include one or more non-transitory computer-readable media storing one or more of: input frames to the encoder, intermediate data structures computed by the encoder, bitstream generated by the encoder, bitstream received by a decoder, intermediate data structures computed by the decoder, and reconstructed frames generated by the decoder. The instructions stored in the one or more non-transitory computer-readable media may be executed by processing device 1302. In some embodiments, memory 1304 may store data, e.g., data structures, binary data, bits, metadata, files, blobs, etc., as described with the FIGS. and herein. Exemplary data that may be stored in memory 1304 are depicted. Memory 1304 may store one or more data as depicted.

In some embodiments, the computing device 1300 may include a communication device 1312 (e.g., one or more communication devices). For example, the communication device 1312 may be configured for managing wired and/or wireless communications for the transfer of data to and from the computing device 1300. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1312 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1312 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1312 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1312 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 1312 may operate in accordance with other wireless protocols in other embodiments. The computing device 1300 may include an antenna 1322 to facilitate wireless communications and/or to receive other wireless communications (such as radio frequency transmissions). Computing device 1300 may include receiver circuits and/or transmitter circuits. In some embodiments, the communication device 1312 may manage wired communications, such as electrical, optical, or any other suitable communication protocols (e.g., the Ethernet). As noted above, the communication device 1312 may include multiple communication chips. For instance, a first communication device 1312 may be dedicated to shorter-range wireless communications such as Wi-Fi or Bluetooth, and a second communication device 1312 may be dedicated to longer-range wireless communications such as global positioning system (GPS), EDGE, GPRS, CDMA, WiMAX, LTE, EV-DO, or others. In some embodiments, a first communication device 1312 may be dedicated to wireless communications, and a second communication device 1312 may be dedicated to wired communications.

The computing device 1300 may include power source / power circuitry 1314. The power source / power circuitry 1314 may include one or more energy storage devices (e.g., batteries or capacitors) and/or circuitry for coupling components of the computing device 1300 to an energy source separate from the computing device 1300 (e.g., DC power, AC power, etc.).

The computing device 1300 may include a display device 1306 (or corresponding interface circuitry, as discussed above). The display device 1306 may include any visual indicators, such as a heads-up display, a computer monitor, a projector, a touchscreen display, a liquid crystal display (LCD), a light-emitting diode display, or a flat panel display, for example.

The computing device 1300 may include an audio output device 1308 (or corresponding interface circuitry, as discussed above). The audio output device 1308 may include any device that generates an audible indicator, such as speakers, headsets, or earbuds, for example.

The computing device 1300 may include an audio input device 1318 (or corresponding interface circuitry, as discussed above). The audio input device 1318 may include any device that generates a signal representative of a sound, such as microphones, microphone arrays, or digital instruments (e.g., instruments having a musical instrument digital interface (MIDI) output).

The computing device 1300 may include a GPS device 1316 (or corresponding interface circuitry, as discussed above). The GPS device 1316 may be in communication with a satellite-based system and may receive a location of the computing device 1300, as known in the art.

The computing device 1300 may include a sensor 1330 (or one or more sensors). The computing device 1300 may include corresponding interface circuitry, as discussed above). Sensor 1330 may sense physical phenomenon and translate the physical phenomenon into electrical signals that can be processed by, e.g., processing device 1302. Examples of sensor 1330 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1300 may include another output device 1310 (or corresponding interface circuitry, as discussed above). Examples of the other output device 1310 may include an audio codec, a video codec, a printer, a wired or wireless transmitter for providing information to other devices, haptic output device, gas output device, vibrational output device, lighting output device, home automation controller, or an additional storage device.

The computing device 1300 may include another input device 1320 (or corresponding interface circuitry, as discussed above). Examples of the other input device 1320 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1300 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1300 may be any other electronic device that processes data.

### Select examples

Example 1 provides a method, including receiving an encoded bitstream, where: the encoded bitstream includes a first packet and frame packets having a first sequence of encoded video frames; the first packet includes a first header, and a first payload; the first payload includes one or more first syntax elements that are to be applied to the first sequence of encoded video frames; and the one or more first syntax elements include a first sequence rotation index value; decoding the first sequence of encoded video frames according to the one or more first syntax elements to obtain a first sequence of decoded video frames; and rotating the first sequence of decoded video frames according to the first sequence rotation index value.

Example 2 provides the method of example 1, where the first packet and the frame packets are in an Open Bitstream Unit format.

Example 3 provides the method of example 1 or 2, where: the first sequence of encoded video frames forms a first shot of a video; and the first shot includes a subset of video frames of the video having one or more uniform spatial-temporal characteristics.

Example 4 provides the method of any one of examples 1-3, where the first header indicates that the first packet is a sequence header packet.

Example 5 provides the method of any one of examples 1-4, where the first sequence rotation index value includes an index value selected from two possible index values.

Example 6 provides the method of example 5, where the two possible index values includes a first index value indicating a clockwise rotation of 90 degrees; and a second index value indicating a counter-clockwise rotation of 90 degrees.

Example 7 provides the method of any one of examples 1-4, where the first sequence rotation index value includes an index value selected from four possible index values.

Example 8 provides the method of example 7, where the four possible index values includes a first index value indicating no rotation; a second index value indicating a clockwise rotation of 90 degrees; a third index value indicating a clockwise rotation of 180 degrees; and a fourth index value indicating a clockwise rotation of 270 degrees.

Example 9 provides the method of any one of examples 1-8, where the one or more first syntax elements further include a sequence profile index value indicating a sequence profile having one or more of: bit depth, monochrome support, chroma subsampling.

Example 10 provides the method of any one of examples 1-9, where the one or more first syntax elements further include a sequence level index value indicating a sequence level having one or more of: maximum picture size, maximum H size, maximum V size, maximum display rate, maximum decode rate, maximum header rate, main megabits per second, high megabits per second, main compressed ratio, high compressed ratio, maximum tiles, and maximum tile columns.

Example 11 provides the method of example 10, where the one or more first syntax elements further include a sequence tier index value indicating a sequence tier within the sequence level.

Example 12 provides the method of any one of examples 1-11, where: the encoded bitstream includes a second packet and further frame packets having a second sequence of encoded video frames; the second packet includes a second header, and a second payload; the second payload includes one or more second syntax elements that are to be applied to the second sequence of encoded video frames; the one or more second syntax elements include a second sequence rotation index value that is different from the first sequence rotation index value; decoding the second sequence of encoded video frames according to the one or more second syntax elements to obtain a second sequence of decoded video frames; and rotating the second sequence of decoded video frames according to the second sequence rotation index value.

Example 13 provides a method, including receiving an uncompressed video having one or more shots; detecting a first orientation of movement of a first shot in the one or more shots; rotating first uncompressed video frames of the first shot based on the first orientation of movement to obtain first rotated uncompressed video frames; encoding the first rotated uncompressed video frames to obtain first encoded video data; writing, into an encoded bitstream, a first sequence header packet having one or more first syntax elements in a first payload of the first sequence header packet, where the one or more first syntax elements are to be applied by a decoder to decode the first shot, and the one or more first syntax elements include a first sequence rotation index value corresponding to the first orientation of movement; and writing, into the encoded bitstream, the first encoded video data as frame packets.

Example 14 provides the method of example 13, further including determining the one or more shots of the uncompressed video based on spatial-temporal characteristics of uncompressed video frames of the uncompressed video.

Example 15 provides the method of example 13 or 14, where the first shot includes a first subset of uncompressed video frames of the uncompressed video having one or more uniform spatial-temporal characteristics.

Example 16 provides the method of any one of examples 13-15, where encoding the first rotated uncompressed video frames includes applying partitioning of the first rotated uncompressed video frames to obtain first blocks; applying intra-frame prediction or inter-frame prediction to the first blocks to obtain predicted residues; applying transformation and quantization to the predicted residues to obtain quantized transform coefficients and syntax elements; and applying entropy coding to the quantized transform coefficients and syntax elements.

Example 17 provides the method of any one of examples 13-16, further including selecting a first sequence rotation index value based on the first orientation of movement.

Example 18 provides the method of any one of examples 13-17, where encoding the first rotated uncompressed video frames includes performing a first stage coarse encoding of the first rotated uncompressed video frames to obtain first coarsely encoded video data; determining one or more parameters that reduces distortion in the first coarsely encoded video data; and performing a second stage fine encoding of the first rotated uncompressed video frames using the one or more parameters to obtain the first encoded video data.

Example 19 provides the method of any one of examples 13-18, further including detecting a second orientation of movement of a second shot in the one or more shots, where the second orientation of movement is different from the first orientation of movement; rotating second uncompressed video frames of the second shot based on the second orientation of movement to obtain second rotated uncompressed video frames; encoding the second rotated uncompressed video frames to obtain second encoded video data; writing, into the encoded bitstream, a second sequence header packet having one or more second syntax elements in a second payload of the second sequence header packet, where the one or more second syntax elements are to be applied by the decoder on the second encoded video data, and the one or more second syntax elements include a second sequence rotation index value corresponding to the second orientation of movement; and writing, into the encoded bitstream, the second encoded video data as further frame packets.

Example 20 provides a method, including encoding first uncompressed video frames of a first shot of one or more shots of a video to obtain a first encoded bitstream; rotating the first uncompressed video frames of the first shot by a first amount to obtain first rotated uncompressed video frames of the first shot; encoding the first rotated uncompressed video frames of the first shot to obtain a second encoded bitstream; comparing sizes of the first encoded bitstream and the second encoded bitstream; selecting an encoded bitstream of the first encoded bitstream and the second encoded bitstream based on the comparing; and transmitting the selected encoded bitstream of the first encoded bitstream and the second encoded bitstream, where: the selected one has a first sequence header packet having one or more first syntax elements in a first payload of the first sequence header packet; the one or more first syntax elements are to be applied by a decoder to decode the first shot; and the one or more first syntax elements include a first sequence rotation index value indicating an amount of rotation applied prior to the encoding.

Example 21 provides the method of example 20, further including rotating the first uncompressed video frames of the first shot by a second amount to obtain second rotated uncompressed video frames of the first shot; encoding the first rotated uncompressed video frames to obtain a third encoded bitstream; and comparing sizes of the first encoded bitstream, the second encoded bitstream, and the third encoded bitstream.

Example 22 provides the method of example 20 or 21, where: the first sequence rotation index value corresponds to no rotation.

Example 23 provides the method of example 20 or 21, where: the first sequence rotation index value corresponds to rotation by the first amount.

Example 24 provides the method of any one of examples 20-23, further including encoding second uncompressed video frames of a second shot of the one or more shots of the video to obtain a third encoded bitstream; rotating the second uncompressed video frames of the second shot by the first amount to obtain third rotated uncompressed video frames of the second shot; encoding the third rotated uncompressed video frames of the first shot to obtain a fourth encoded bitstream; and comparing sizes of the third encoded bitstream and the fourth encoded bitstream.

Example 25 provides one or more non-transitory computer-readable media storing instructions that, when executed by one or more processors, cause the one or more processors to: receive an encoded bitstream, where: the encoded bitstream includes a first packet and frame packets having a first sequence of encoded video frames; the first packet includes a first header, and a first payload; the first payload includes one or more first syntax elements that are to be applied to the first sequence of encoded video frames; and the one or more first syntax elements include a first sequence rotation index value; decode the first sequence of encoded video frames according to the one or more first syntax elements to obtain a first sequence of decoded video frames; and rotate the first sequence of decoded video frames according to the first sequence rotation index value.

Example 26 provides the one or more non-transitory computer-readable media of example 25, where the first packet and the frame packets are in an Open Bitstream Unit format.

Example 27 provides the one or more non-transitory computer-readable media of example 25 or 26, where: the first sequence of encoded video frames forms a first shot of a video; and the first shot includes a subset of video frames of the video having one or more uniform spatial-temporal characteristics.

Example 28 provides the one or more non-transitory computer-readable media of any one of examples 25-27, the first header indicates that the first packet is a sequence header packet.

Example 29 provides the one or more non-transitory computer-readable media of any one of examples 25-28, where the first sequence rotation index value includes an index value selected from two possible index values.

Example 30 provides the one or more non-transitory computer-readable media of example 29, where the two possible index values includes a first index value indicating a clockwise rotation of 90 degrees; and a second index value indicating a counter-clockwise rotation of 90 degrees.

Example 31 provides the one or more non-transitory computer-readable media of any one of examples 25-28, where the first sequence rotation index value includes an index value selected from four possible index values.

Example 32 provides the one or more non-transitory computer-readable media of example 31, where the four possible index values includes a first index value indicating no rotation; a second index value indicating a clockwise rotation of 90 degrees; a third index value indicating a clockwise rotation of 180 degrees; and a fourth index value indicating a clockwise rotation of 270 degrees.

Example 33 provides the one or more non-transitory computer-readable media of any one of examples 25-32, where the one or more first syntax elements further include a sequence profile index value indicating a sequence profile having one or more of: bit depth, monochrome support, chroma subsampling.

Example 34 provides the one or more non-transitory computer-readable media of any one of examples 25-33, where the one or more first syntax elements further include a sequence level index value indicating a sequence level having one or more of: maximum picture size, maximum H size, maximum V size, maximum display rate, maximum decode rate, maximum header rate, main megabits per second, high megabits per second, main compressed ratio, high compressed ratio, maximum tiles, and maximum tile columns.

Example 35 provides the one or more non-transitory computer-readable media of example 34, where the one or more first syntax elements further include a sequence tier index value indicating a sequence tier within the sequence level.

Example 36 provides the one or more non-transitory computer-readable media of any one of examples 25-35, where: the encoded bitstream includes a second packet and further frame packets having a second sequence of encoded video frames; the second packet includes a second header, and a second payload; the second payload includes one or more second syntax elements that are to be applied to the second sequence of encoded video frames; the one or more second syntax elements include a second sequence rotation index value that is different from the first sequence rotation index value; decoding the second sequence of encoded video frames according to the one or more second syntax elements to obtain a second sequence of decoded video frames; and rotating the second sequence of decoded video frames according to the second sequence rotation index value.

Example 37 provides one or more non-transitory computer-readable media storing instructions that, when executed by one or more processors, cause the one or more processors to: receive an uncompressed video having one or more shots; detect a first orientation of movement of a first shot in the one or more shots; rotate first uncompressed video frames of the first shot based on the first orientation of movement to obtain first rotated uncompressed video frames; encode the first rotated uncompressed video frames to obtain first encoded video data; write, into an encoded bitstream, a first sequence header packet having one or more first syntax elements in a first payload of the first sequence header packet, where the one or more first syntax elements are to be applied by a decoder to decode the first shot, and the one or more first syntax elements include a first sequence rotation index value corresponding to the first orientation of movement; and write, into the encoded bitstream, the first encoded video data as frame packets.

Example 38 provides the one or more non-transitory computer-readable media of example 37, where the instructions cause the one or more processors to further: determine the one or more shots of the uncompressed video based on spatial-temporal characteristics of uncompressed video frames of the uncompressed video.

Example 39 provides the one or more non-transitory computer-readable media of example 37 or 38, where the first shot includes a first subset of uncompressed video frames of the uncompressed video having one or more uniform spatial-temporal characteristics.

Example 40 provides the one or more non-transitory computer-readable media of any one of examples 37-39, where encoding the first rotated uncompressed video frames includes applying partitioning of the first rotated uncompressed video frames to obtain first blocks; applying intra-frame prediction or inter-frame prediction to the first blocks to obtain predicted residues; applying transformation and quantization to the predicted residues to obtain quantized transform coefficients and syntax elements; and applying entropy coding to the quantized transform coefficients and syntax elements.

Example 41 provides the one or more non-transitory computer-readable media of any one of examples 37-40, where the instructions cause the one or more processors to further: select a first sequence rotation index value based on the first orientation of movement.

Example 42 provides the one or more non-transitory computer-readable media of any one of examples 37-41, where encoding the first rotated uncompressed video frames includes performing a first stage coarse encoding of the first rotated uncompressed video frames to obtain first coarsely encoded video data; determining one or more parameters that reduces distortion in the first coarsely encoded video data; and performing a second stage fine encoding of the first rotated uncompressed video frames using the one or more parameters to obtain the first encoded video data.

Example 43 provides the one or more non-transitory computer-readable media of any one of examples 37-42, where the instructions cause the one or more processors to further: detecting a second orientation of movement of a second shot in the one or more shots, where the second orientation of movement is different from the first orientation of movement; rotating second uncompressed video frames of the second shot based on the second orientation of movement to obtain second rotated uncompressed video frames; encoding the second rotated uncompressed video frames to obtain second encoded video data; writing, into the encoded bitstream, a second sequence header packet having one or more second syntax elements in a second payload of the second sequence header packet, where the one or more second syntax elements are to be applied by the decoder on the second encoded video data, and the one or more second syntax elements include a second sequence rotation index value corresponding to the second orientation of movement; and writing, into the encoded bitstream, the second encoded video data as further frame packets.

Example 44 provides one or more non-transitory computer-readable media storing instructions that, when executed by one or more processors, cause the one or more processors to: encode first uncompressed video frames of a first shot of one or more shots of a video to obtain a first encoded bitstream; rotate the first uncompressed video frames of the first shot by a first amount to obtain first rotated uncompressed video frames of the first shot; encode the first rotated uncompressed video frames of the first shot to obtain a second encoded bitstream; compare sizes of the first encoded bitstream and the second encoded bitstream; select an encoded bitstream of the first encoded bitstream and the second encoded bitstream based on the comparing; and transmit the selected encoded bitstream of the first encoded bitstream and the second encoded bitstream, where: the selected one has a first sequence header packet having one or more first syntax elements in a first payload of the first sequence header packet; the one or more first syntax elements are to be applied by a decoder to decode the first shot; and the one or more first syntax elements include a first sequence rotation index value indicating an amount of rotation applied prior to the encoding.

Example 45 provides the one or more non-transitory computer-readable media of example 44, where the instructions cause the one or more processors to further: rotate the first uncompressed video frames of the first shot by a second amount to obtain second rotated uncompressed video frames of the first shot; encode the first rotated uncompressed video frames to obtain a third encoded bitstream; and compare sizes of the first encoded bitstream, the second encoded bitstream, and the third encoded bitstream.

Example 46 provides the one or more non-transitory computer-readable media of example 44 or 45, where: the first sequence rotation index value corresponds to no rotation.

Example 47 provides the one or more non-transitory computer-readable media of example 44 or 45, where: the first sequence rotation index value corresponds to rotation by the first amount.

Example 48 provides the one or more non-transitory computer-readable media of any one of examples 44-47, where the instructions cause the one or more processors to further: encode second uncompressed video frames of a second shot of the one or more shots of the video to obtain a third encoded bitstream; rotate the second uncompressed video frames of the second shot by the first amount to obtain third rotated uncompressed video frames of the second shot; encode the third rotated uncompressed video frames of the first shot to obtain a fourth encoded bitstream; and compare sizes of the third encoded bitstream and the fourth encoded bitstream.

Example A provides an apparatus comprising means to carry out or means for carrying out any one of the computer-implemented methods provided in examples 1-24.

Example B provides a computer-implemented system, comprising one or more processors, and one or more non-transitory computer-readable media storing instructions that, when executed by the one or more processors, cause the one or more processors to perform any one of the methods provided in examples 1-24.

Example C provides an apparatus, comprising: one or more processors for executing instructions, and one or more non-transitory computer-readable media according to one or more of the non-transitory computer-readable media of examples 25-48.

Example D provides an encoder or one or more encoder side parts to generate an orientation-aware encoded bitstream using operations described herein.

Example E provides a decoder or one or more decoder side parts to decode an orientation-aware encoded bitstream using operations described herein.

### Variations and other notes

Although the operations of the example method shown in and described with reference to FIGS. 1-4 and 7-12 are illustrated as occurring once each and in a particular order, it will be recognized that the operations may be performed in any suitable order and repeated as desired. Additionally, one or more operations may be performed in parallel. Furthermore, the operations illustrated in FIGS. 1-4 and 7-12 may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:
receiving an encoded bitstream, wherein:
the encoded bitstream comprises a first packet and frame packets having a first sequence of encoded video frames;
the first packet comprises a first header, and a first payload;
the first payload comprises one or more first syntax elements that are to be applied to the first sequence of encoded video frames; and
the one or more first syntax elements comprise a first sequence rotation index value;
decoding the first sequence of encoded video frames according to the one or more first syntax elements to obtain a first sequence of decoded video frames; and
rotating the first sequence of decoded video frames according to the first sequence rotation index value.

2. The method of claim 1, wherein the first packet and the frame packets are in an Open Bitstream Unit format.

3. The method of claim 1 or 2, wherein:
the first sequence of encoded video frames forms a first shot of a video; and
the first shot comprises a subset of video frames of the video having one or more uniform spatial-temporal characteristics.

4. The method of any one of claims 1-3, wherein the first header indicates that the first packet is a sequence header packet.

5. The method of any one of claims 1-4, wherein the first sequence rotation index value comprises an index value selected from two possible index values.

6. The method of claim 5, wherein the two possible index values comprises:
a first index value indicating a clockwise rotation of 90 degrees; and
a second index value indicating a counter-clockwise rotation of 90 degrees.

7. The method of any one of claims 1-4, wherein the first sequence rotation index value comprises an index value selected from four possible index values.

8. The method of claim 7, wherein the four possible index values comprises:
a first index value indicating no rotation;
a second index value indicating a clockwise rotation of 90 degrees;
a third index value indicating a clockwise rotation of 180 degrees; and
a fourth index value indicating a clockwise rotation of 270 degrees.

9. The method of any one of claims 1-8, wherein the one or more first syntax elements further comprise:
a sequence profile index value indicating a sequence profile having one or more of: bit depth, monochrome support, chroma subsampling.

10. The method of any one of claims 1-9, wherein the one or more first syntax elements further comprise:
a sequence level index value indicating a sequence level having one or more of: maximum picture size, maximum H size, maximum V size, maximum display rate, maximum decode rate, maximum header rate, main megabits per second, high megabits per second, main compressed ratio, high compressed ratio, maximum tiles, and maximum tile columns.

11. The method of claim 10, wherein the one or more first syntax elements further comprise:
a sequence tier index value indicating a sequence tier within the sequence level.

12. The method of any one of claims 1-11, wherein:
the encoded bitstream comprises a second packet and further frame packets having a second sequence of encoded video frames;
the second packet comprises a second header, and a second payload;
the second payload comprises one or more second syntax elements that are to be applied to the second sequence of encoded video frames;
the one or more second syntax elements comprise a second sequence rotation index value that is different from the first sequence rotation index value;
decoding the second sequence of encoded video frames according to the one or more second syntax elements to obtain a second sequence of decoded video frames; and
rotating the second sequence of decoded video frames according to the second sequence rotation index value.

13. One or more non-transitory computer-readable media storing instructions that, when executed by one or more processors, cause the one or more processors to perform a method according to any one of claims 1-12

14. An apparatus, comprising:
one or more processors for executing instructions; and
one or more non-transitory computer-readable media storing the instructions, the instructions causing the one or more processors to perform a method according to any one of claims 1-12.
